# EUROPEAN PATENT APPLICATION

(11) **EP 2 544 082 A1**
(43) Date of publication of application: **09.01.2013**
(21) Application number: 10847012.1
(22) Date of filing: 05.03.2010
(51) Int. Cl.: G06F 3/048

(54) **IMAGE DISPLAY SYSTEM, INFORMATION PROCESSING APPARATUS, DISPLAY APPARATUS, AND IMAGE DISPLAY METHOD**

(71) Applicant: Fujitsu Limited, Kawasaki-shi, Kanagawa 211-8588 (JP)
(72) Inventor: YOSHIOKA, Takayuki, Kawasaki-shi Kanagawa 211-8588 (JP)
(74) Representative: Lewin, David Nicholas
(86) International application number: PCT/JP2010/053613
(87) International publication number: WO 2011/108109

(57) **Abstract**

In an image display system 2, an image data converting unit 159 of a personal computer 100 obtains lower-order image data representing at least a part of one of images that is second or lower in the display priority. A lower-order image data transmitting unit 160 of the personal computer 100 transmits the lower-order image data, and a lower-order image data receiving unit 256 of a sub-display device 200 receives the lower-order image data. Then, the second display control unit 257 of the sub-display device 200 causes a sub-display to display a partial image based on the lower-order image data. Accordingly, a user can view an image desired to view without disturbing an appearance in which the image desired to view is hidden by another image.

## Description

### TECHNICAL FIELD

Embodiments described herein relate to an image display system that displays an image, an information processing apparatus in the image display system, a display device, and an image display method for displaying an image with the image display system.

### BACKGROUND ART

When a plurality of images are called onto the display screen one after another so as to display images on a display screen, a conventional computer system displays a composite image in an appearance in which a newly called image is superimposed on previously called and displayed images. Depending on the size of a newly called image, a composite image may be occupied by the newly called image.

In such a composite image, viewing an image apparently covered with another image is enabled by, for example, the following processing.

For example, in response to a user operation designating an image desired to view, the whole or a part of the image desired to view may be apparently superimposed and displayed on another image that covers the designated image.

In recent years, there has also been an increasingly popular technique that uses two display screens to display images: a display screen supplied with a computer system and a display screen on a display device that is auxiliary to the computer system. In such a technique, as processing for viewing an image apparently covered with another image on the display screen of the computer system, for example, the following processing is known. In the processing, in response to a user's operation, another image hiding an image desired to view is moved from the display screen of the computer system to the display screen of the display device for auxiliary image display. As a result, on the display screen of the computer system, the other image covering the image desired to view is removed and the image desired to view can be allowed.

### [Prior Art]

### [Patent Document]

[Patent document 1] Japanese Patent Laid-Open No. 2001 - 175450
[Patent document 2] Japanese Patent Laid-Open No. 10-269053
[Patent document 3] Japanese Patent Laid-Open No. 2000 -172399

### [Non-Patent document ]

[Non-Patent document 1]
   Internet<URL:http://www.century.co.jp/products/pc/monitor /lcd-4300u.html〉
[Non-Patent document 2] Internet
   〈URL:http://www.fmworld.net/fmv/pcpm0812/biblo_loox/nw/i ndex.html?fmwfrom=fmv_serieslist〉

### BRIEF OF THE INVENTION

### PROBLEMS TO BE SOLVED BY THE INVENTION

However, any of the foregoing techniques that allow viewing an image apparently covered with another image would disturb a current appearance in which an image desired to view is covered with another image. In addition, when an image apparently covered with another image is viewed in such an appearance, there is also a demand for maintaining the current appearance.

In view of the foregoing circumstances, it is an object in one aspect of the present subject to provide an image display system, an information processing apparatus, a display device, and an image display method for enabling viewing an image desired to view without disturbing an appearance in which the image desired to view is hidden by another image.

### MEANS FOR SOLVING THE PROBLEMS

According to an aspect of the embodiments, an image display system is an image display system including: a first display device including a display screen that displays an image based on image data and a second display device including a display screen that displays an image based on image data transmitted from the first display device.

The first display device includes a memory, an image composition unit, a first display control unit, a lower-order image creating unit, and an image transmitting unit.

When there are a plurality of images instructed to be displayed on the display screen of the first display device, the memory stores a display priority of the plurality of images.

The image composition unit creates composite image data representing a composite image of an appearance in which an image that is lower in the display priority among the plurality of images is hidden by an image that is higher in the display priority.

The first display control unit displays the composite image on the display screen of the first display device based on the composite image data created by the image composition unit.

The lower-order image creating unit creates lower-order image data representing at least a part of one of images that is second or lower in the display priority.

The image transmitting unit transmits the lower-order image data created by the lower-order image creating unit to the second display device.

Also, the second display device includes an image receiving unit and a second display control unit.

The image receiving unit receives the lower-order image data transmitted from the first display device.

The second display control unit displays, on the display screen of the second display device, a partial image based on the lower-order image data received by the image receiving unit.

Also, an information processing apparatus displays an image on a display screen based upon image data, and includes a memory, an image composition unit, a control unit, a lower-order image creating unit, and an image transmitting unit.

When there are a plurality of images instructed by the information processing apparatus to be displayed onto the display screen, the memory stores a display priority of the plurality of images.

The image composition unit creates composite image data representing a composite image of an appearance in which an image that is lower in the display priority among the plurality of images is hidden by an image that is higher in the display priority.

The control unit displays the composite image on the display screen based on the composite image data created by the image composition unit.

The lower-order image creating unit creates lower-order image data representing at least a part of one of images that is second or lower in the display priority.

The image transmitting unit transmits the lower-order image data created by the lower-order image creating unit to a display device including the display screen which receives image data and displays an image based on the received image data.

Also, a display device displays an image on a display screen based upon image data transmitted from an information processing apparatus for displaying on a display screen an image based on image data. The display device includes an area designating unit, a designated area transmitting unit, an image receiving unit, and a display control unit.

The area designating unit designates an area displayed on the display screen by the information processing apparatus, to be freely movable in response to an operation by an operator.

The designated area transmitting unit transmits, to the information processing apparatus, area designation data representing the area on the display screen designated by the area designating unit.

The image receiving unit receives lower-order image data representing a partial image in an area based on the area designation data of one of images that is second or lower in the display priority in the information processing apparatus, the lower-order image data being transmitted from the information processing apparatus.

The display control unit causes the display screen to display the partial image based on the lower-order image data received by the image receiving unit.

Also, an image display method is an image display method for displaying an image on the image display system. The image display method includes a lower-order image creating step, an image transmitting step, an image receiving step, and a display control step.

The lower-order image creating step is a step of, in the first display device, creating lower-order image data representing at least a part of one of images that is second or lower in the display priority and configuring a composite image displayed on the first display screen.

The image transmitting step is a step of, in the first display device, transmitting the lower-order image data created in the lower-order image creating step to the second display device.

The image receiving step is a step of, in the second display device, receiving the lower-order image data transmitted from the first display device.

The display control step is a step of, in the second display device, displaying on the second display screen a partial image based on the lower-order image data received in the image receiving step.

### EFFECTS OF THE INVENTION

According to the present subject, an image desired to view can be viewed without disturbing an appearance in which the image desired to view is hidden by another image.

### BRIEF DESCRIPTION OF THE DRAWINGS

FIG. 1 is a diagram illustrating a first embodiment of an image display system and a first display device of the present subject;
FIG. 2 is a flow chart illustrating the first embodiment of an image display method of the present subject performed by the image display system in FIG. 1;
FIG. 3 is a diagram illustrating the first embodiment of a display device of the present subject;
FIG. 4 is a diagram illustrating a second embodiment of the image display system of the present subject;
FIG. 5 is a diagram schematically illustrating image display performed by the image display system in FIG. 4;
FIG. 6 is an enlarged view of a sub-display device illustrated in FIG. 4;
FIG. 7 is a hardware block diagram of the image display system illustrated in FIG. 4;
FIG. 8A is a diagram illustrating function blocks of the image display system illustrated in FIG. 4;
FIG. 8B is a diagram illustrating function blocks of the image display system illustrated in FIG. 4;
FIG. 9 is a diagram illustrating the correspondence between the function blocks illustrated in FIG. 8A and FIG. 8B and components illustrated in FIG. 7;
FIG. 10 is a flow chart depicting a flow of image displaying process executed by the image display system having the function blocks illustrated in FIG. 8A and FIG. 8B;
FIG. 11A is a diagram schematically illustrating initial position determining process;
FIG. 11B is a diagram schematically illustrating initial position determining process;
FIG. 12 is a diagram illustrating an area designating method selection screen displayed on a sub-display by a position data creating unit;
FIG. 13 is a first half of a flow chart depicting a flow of a lower-order image displaying process;
FIG. 14 is a second half of the flow chart depicting the flow of the lower-order image displaying process;
FIG. 15 is a diagram illustrating a correspondence between position data representing an initial position of a sub-display device and an initial position in an area on a main display;
FIG. 16 is a diagram illustrating a correspondence between position data representing any device position of the sub-display device and a position of the area on the main display;
FIG. 17A is a schematic diagram illustrating a touch operation to a touch sensor;
FIG. 17B is a schematic diagram illustrating a touch operation to a touch sensor;
FIG. 17C is a schematic diagram illustrating a touch operation to a touch sensor;
FIG. 18 is a diagram schematically illustrating position data creation that uses a touch position;
FIG. 19 is a schematic diagram illustrating a button operation for designating a magnification;
FIG. 20 is a schematic diagram illustrating a button operation for designating an image;
FIG. 21 is a diagram schematically illustrating an image data group and lower-order image data determined from the image data group;
FIG. 22 is a diagram schematically illustrating an example of image display performed in the image display system in FIG. 4;
FIG. 23 is a schematic diagram illustrating how an area of a window screen that is a lower-order image that is second in the display priority is set in the example of FIG. 22;
FIG. 24 is a schematic diagram illustrating how an area of a desktop screen that is a lower-order image that is third in the display priority is set in the example of FIG. 22.

### DESCRIPTION OF EMBODIMENT(s)

Hereinafter, specific embodiments of an image display system, a first display device, a second display device, and an image display method of the present subject will be described with reference to the drawings.

First of all, a first embodiment will be described.

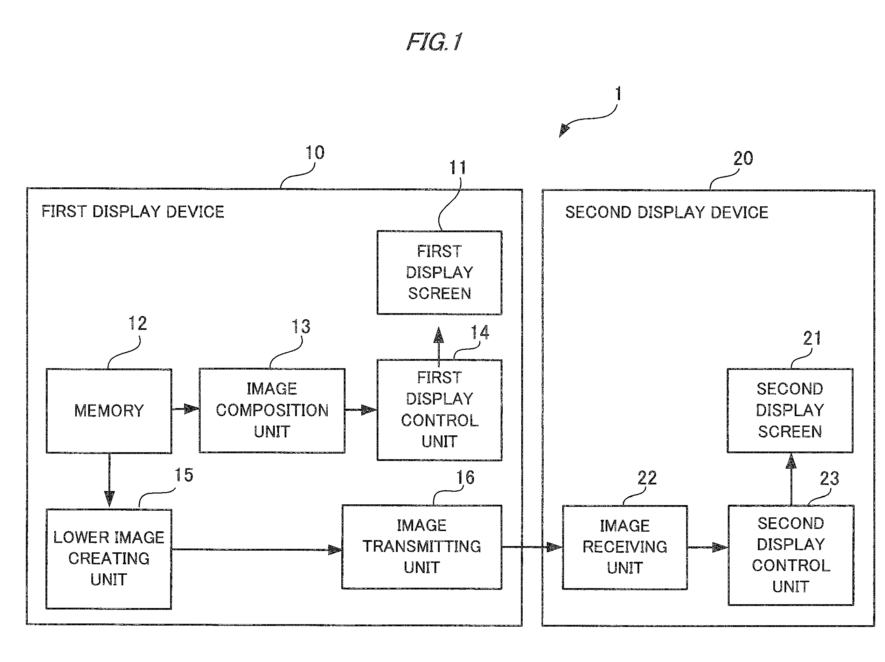

FIG. 1 is a diagram illustrating the first embodiment of the image display system and the first display device of the present subject.

An image display system 1 illustrated in FIG. 1 is an image display system including a first display device 10 and a second display device 20 as described below. The first display device 10 includes a first display screen 11 that displays an image based on image data. The second display device 20 includes a second display screen 21 that displays the image based on the image data transmitted from the first display device 10.

Also, the first display device 10 includes a memory 12, an image composition unit 13, a first display control unit 14, a lower image creating unit 15, and an image transmitting unit 16.

The memory 12 is storage of, if there are a plurality of images designated to be displayed on the first display screen 11, display priorities of the images.

The image composition unit 13 creates composite image data representing a composite image of an appearance in which an image that is lower in the display priority among the plurality of images is hidden by an image that is higher in the display priority.

The first display control unit 14 causes the first display screen 11 to display the composite image based on the composite image data created by the image composition unit 13.

The lower-order image creating unit 15 creates lower-order image data representing at least a part of one of images that is second or lower in the display priority.

The image transmitting unit 16 transmits the lower-order image data created by the lower-order image creating unit 15 to the second display device 20.

Also, the second display device 20 includes an image receiving unit 22 and a second display control unit 23.

The image receiving unit 22 receives the lower-order image data transmitted from the first display device 10.

The second display control unit 23 causes the second display screen 21 to display a partial image based on the lower-order image data received by the image receiving unit 22.

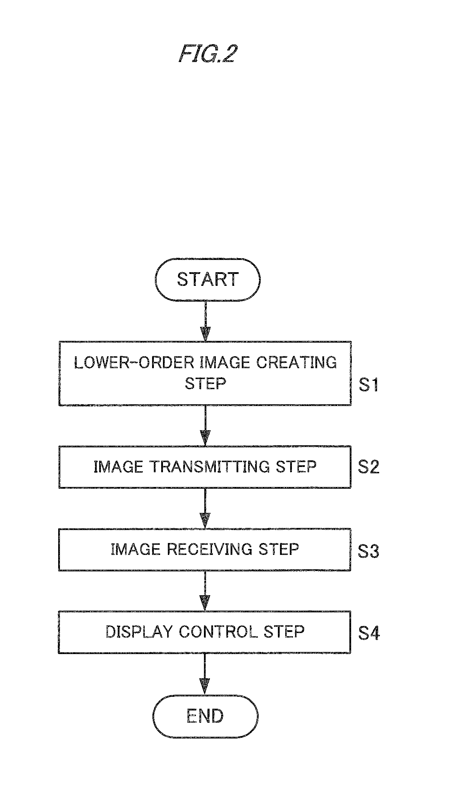

FIG. 2 is a flow chart illustrating the first embodiment of the image display method of the present subject performed by the image display system in FIG. 1.

The image display method depicted by the flow chart in FIG. 2 includes a lower-order image creating step (S1), an image transmitting step (S2), an image receiving step (S3), and a display control step (S4).

The lower-order image creating step (S1) is a step of, in the first display device 10, creating lower-order image data representing at least a part of one of the images, the images being second or lower in the display priority and which configure the composite image displayed on the first display screen 11.

The image transmitting step (S2) is a step of, in the first display device, transmitting the lower-order image data created in the lower-order image creating step (S1) to the second display device 20.

The image receiving step (S3) is a step of, in the second display device 20, receiving the lower-order image data transmitted from the first display device 10.

The display control step (S4) is a step of, in the second display device 20, causing the second display screen 21 to display a partial image based on the lower-order image data received in the image receiving step (S3).

In the image display system 1, an image that is lower in the display priority in the memory will be apparently hidden by an image that is higher in the display priority on the first display screen 11 of the first display device 10. In the image display system 1, the lower-order image data for one of the images that are second or lower in the display priority is created. Then, the lower-order image data is transmitted from the first display device 10 to the second display device 20, and an image represented by the lower-order image data is displayed on the second display screen 21 of the second display device 20. As a result, a user can view, on the second display screen 21 of the second display device 20, an image desired to view apparently hidden by another image on the first display screen 11. On the other hand, on the first display screen 11 of the first display device 10, a composite image of an appearance in which the image desired to view is hidden by the other image is still displayed.

Namely, according to the image display system 1, the first display device 10, and the image display method of the present embodiment, an image desired to view can be viewed without disturbing an appearance in which the image desired to view is hidden by another image.

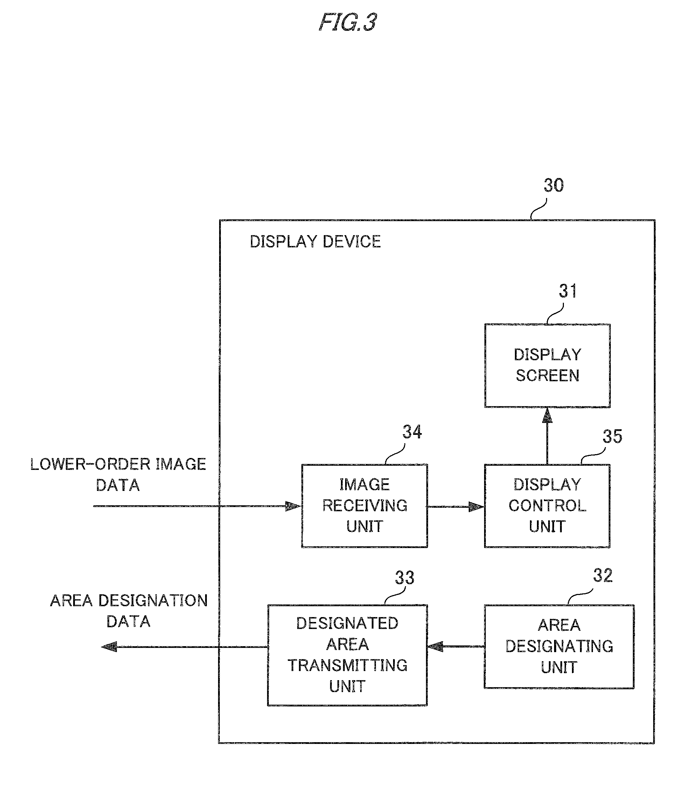

FIG. 3 is a diagram illustrating the first embodiment of the display device of the present subject.

A display device 30 illustrated in FIG. 3 displays an image on a display screen 31 based upon image data transmitted from the information processing apparatus for displaying an image based upon image data on the display screen. The display device 30 includes an area designating unit 32, a designated area transmitting unit 33, an image receiving unit 34, and a display control unit 35.

The area designating unit 32 designates an area on the display screen 31 displayed by the information processing apparatus to be freely movable in response to an operation by the operator.

The designated area transmitting unit 33 transmits area designation data representing the area on the display screen 31 designated by the area designating unit 32, to the information processing apparatus.

The image receiving unit 34 receives lower-order image data transmitted from the information processing apparatus, the data representing a partial image of one of images that is second or lower in the display priority in the information processing apparatus, the partial image being in the area based on the area designation data.

The display control unit 35 causes the display screen 31 to display the partial image based on the lower-order image data received by the image receiving unit 34.

According to the display device 30 in FIG. 3, if the user desires to view an image that is second or lower in the display priority in the information processing apparatus and hidden by another image, the user can view the image on the display screen 31. Also, in viewing the image, it is unnecessary to cause the information processing apparatus to change a display appearance on the display screen of the information processing apparatus. Namely, according to the display device 30 of the present embodiment, an image desired to view can be viewed without disturbing an appearance in which the image desired to view is hidden by another image. Further, in the display device 30 in FIG. 3, an area of an image desired to view is designated, and a partial image in the designated area is displayed on the display screen 31. Thereby, the user can obtain a pinpoint view of a part desired to be particularly viewed in an image desired to view on the display screen 31.

Next, a second embodiment will be described.

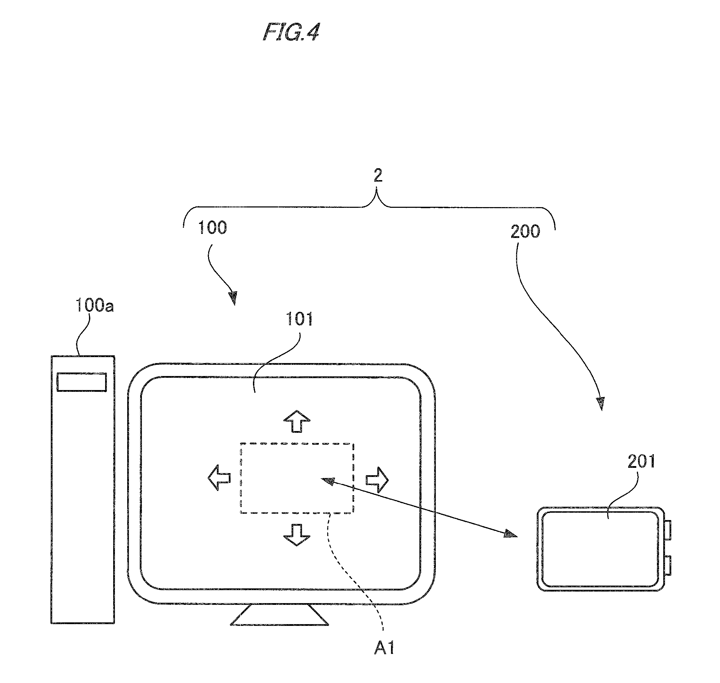

FIG. 4 is a diagram illustrating the second embodiment of the image display system of the present subject.

An image display system 2 illustrated in FIG. 4 includes a personal computer 100 and a sub-display device 200.

The personal computer 100 includes a main body apparatus 100a that executes a variety of information processes and a main display 101 that displays an image based on image data supplied from the main body apparatus 100a. The personal computer 100 corresponds to an example of the first display device in the image display system of the present subject. Also, the personal computer 100 corresponds to the second embodiment of the information processing apparatus of the present subject. Also, the main display 101 corresponds to an example of the display screen of each of the first display device and the information processing apparatus in the image display system of the present subject.

The sub-display device 200 includes a sub-display 201 that displays an image based on image data transmitted from the personal computer 100 through wireless communications using a radio wave. The sub-display device 200 corresponds to an example of the second display device in the image display system of the present subject. Also, the sub-display device 200 corresponds to the second embodiment of the subject display device. Also, the sub-display 201 corresponds to an example of the display screen of each of the second display device and the display device in the image display system of the present subject.

In the image display system 2 illustrated in FIG. 4, substantially, image display as described below is performed.

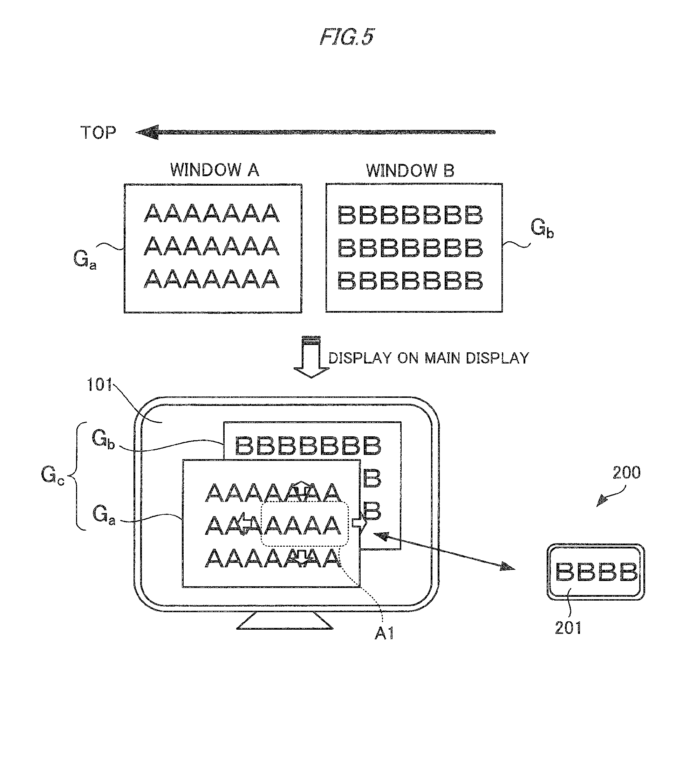

FIG. 5 is a diagram schematically illustrating the image display performed by the image display system in FIG. 4.

As illustrated in FIG. 5, in the personal computer 100, a plurality of images can be instructed to be displayed on the main display 101. In the personal computer 100, if a plurality of images are instructed to be displayed one after another, a composite image of an appearance is displayed in which a newly instructed image is superimposed on an already displayed image. Hereinafter, an image newly instructed and displayed on the front of the main display 101 is referred to as an upper image, and an image hidden by the upper image is referred to as a lower-order image.

FIG. 5 illustrates the main display 101 that displays a composite image Gc of an appearance in which an upper image Ga of two images is superimposed on a lower-order image Gb.

In the present embodiment, any area A1 on the main display 101 is designated to be freely movable in response to an operation by the user in the sub-display device 200.

Then, a partial image of the designated area A1 in a lower-order image hidden by an upper image on the main display 101 is displayed on the sub-display 201 of the sub-display device 200. Also, at this time, the composite image is still displayed on the main display 101. In FIG. 5, the partial image in the area A1 in the lower-order image Gb is displayed on the sub-display 201, and the composite image Gc is displayed on the main display 101.

In this manner, in the image display system 2 of the present embodiment, without disturbing an appearance in which an image is hidden by another image on the main display 101, the hidden image can be viewed on the sub-display 201.

Now, a configuration of the image display system 2 for achieving the image display schematically described with reference to FIG. 5, and image displaying process executed in the image display system 2 will be described in detail.

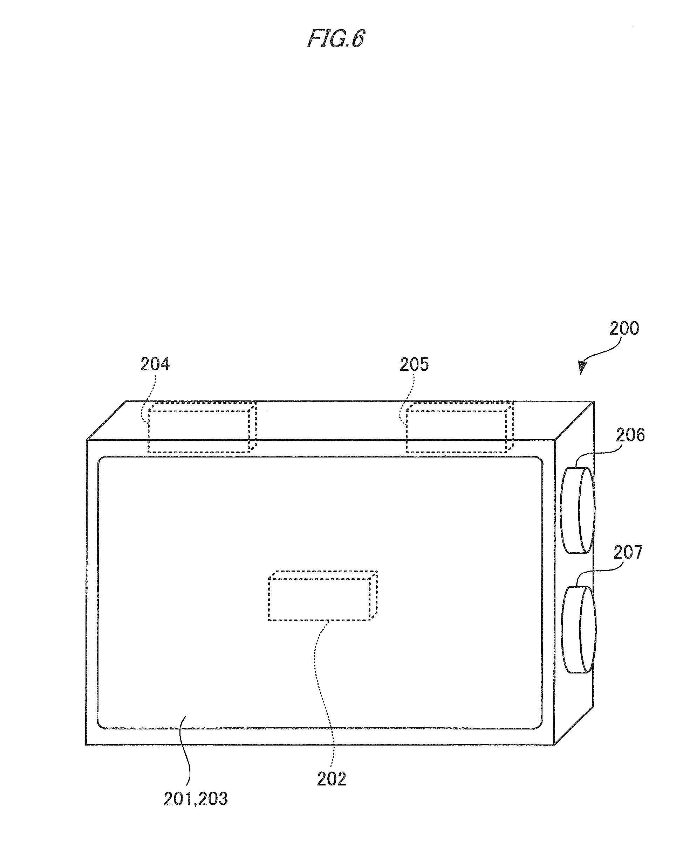

FIG. 6 is an enlarged view of the sub-display device illustrated in FIG. 4.

This sub-display device 200 may be freely moved by the user. Also, the sub-display device 200 includes an aerial mouse 202 for detecting a position of the sub-display device 200 (a device position) using a three-dimensional acceleration sensor.

Also, the sub-display 201 in the sub-display device 200 incorporates a touch sensor 203 for detecting a user's touch position on the sub-display 201.

In the present embodiment, the area A1 on the main display 101 is designated using, basically, a device position detected by the aerial mouse 202 or a touch position detected by the touch sensor 203. Also, the sub-display device 200 includes a transceiver for area designation 204 that transmits area designation data for designating the area A1 in this way to the personal computer 100 through wireless communications using a radio wave.

In receiving the area designation data from the sub-display device 200, the personal computer 100 creates lower-order image data representing a partial image in the area A1 designated by the area designation data in the lower-order image. Then, in the personal computer 100, the created lower-order image data is transmitted to the sub-display device 200. The sub-display device 200 includes a transceiver for image 205 that receives the lower-order image data transmitted from the personal computer 100 through wireless communications using a radio wave. Further, the sub-display device 200 includes two, A and B operation buttons 206 and 207 described later in relation to a detailed operation.

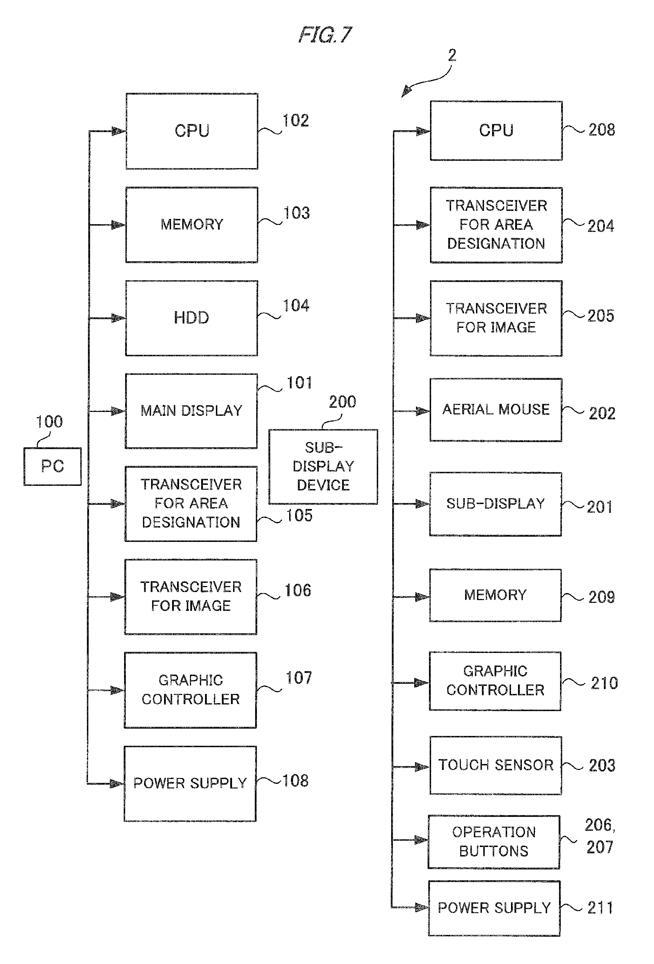

FIG. 7 is a hardware block diagram of the image display system illustrated in FIG. 4.

The personal computer 100 included in the image display system 2 includes a CPU 102, a memory 103, and an HDD (Hard Disk Drive) 104 in addition to the main display 101 also illustrated in FIG. 4. The CPU 102 controls general information processing in the personal computer 100. The memory 103 is storage of various programs and data necessary for the information processing controlled by the CPU 102. The HDD 104 is a bulk information storage device in which various programs and data are stored in internal magnetic disks.

Also, the personal computer 100 includes a transceiver for area designation 105 and a transceiver for image 106. The transceiver for area designation 105 of the personal computer 100 receives area designation data transmitted from the transceiver for area designation 204 of the sub-display device 200 through wireless communications using a radio wave. Also, the transceiver for image 106 of the personal computer 100 transmits the lower-order image data to the sub-display device 200 through wireless communications using a radio wave.

Further, the personal computer 100 includes a graphic controller 107 for controlling image display in the main display 101 and a power supply 108 for supplying power to each of the components.

The sub-display device 200 included in the image display system 2 includes the following components in addition to the components also illustrated in FIG. 4.

The sub-display device 200 includes a CPU 208 and a memory 209. The CPU 208 controls general information processing in the sub-display device 200. The memory 209 is storage of various programs and data necessary for the information processing controlled by the CPU 208. Further, the sub-display device 200 includes a graphic controller 210 for controlling image display in the sub-display 201 and a power supply 211 for supplying power to each of the components in the sub-display device 200.

The image display described with reference to FIG. 5 is achieved by components in each of the personal computer 100 and the sub-display device 200 illustrated in FIG. 7 constructing the following function blocks.

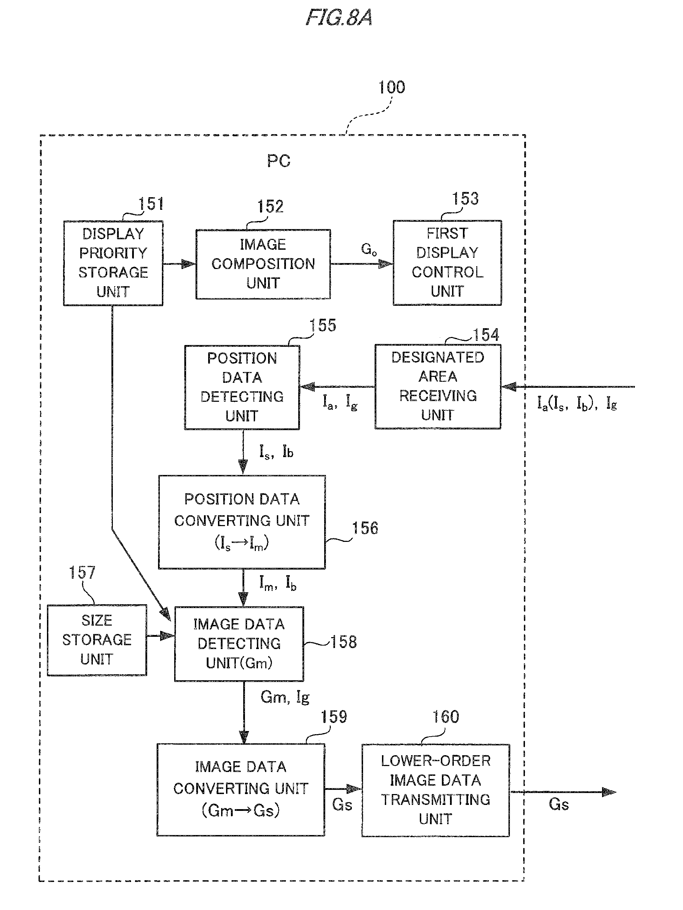

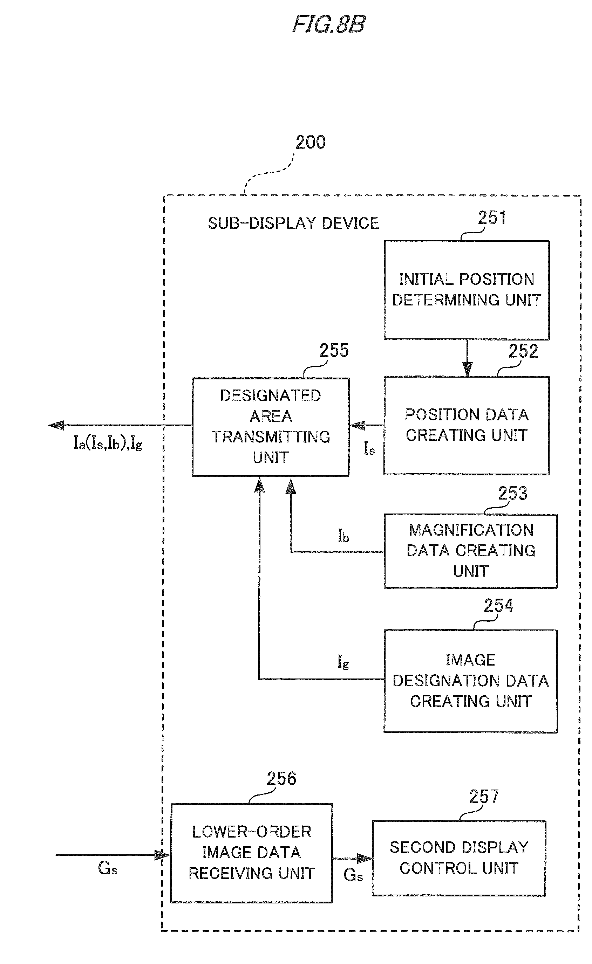

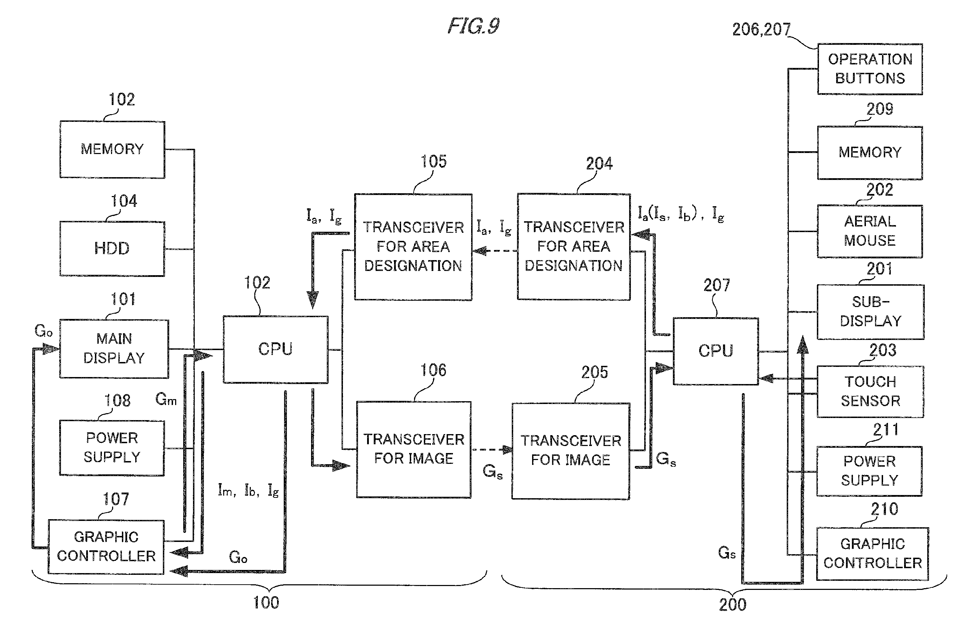

FIG. 8A and FIG. 8B are diagrams illustrating the function blocks of the image display system illustrated in FIG. 4. Also, FIG. 9 is a diagram illustrating the correspondence between the function blocks illustrated in FIG. 8A and FIG. 8B and the components illustrated in FIG. 7.

As illustrated in FIG. 8A, the personal computer 100 includes a display priority storage unit 151, an image composition unit 152, and a first display control unit 153 as the function blocks.

The display priority storage unit 151 stores, if there are a plurality of images instructed to be displayed on the main display 101, a display priority for the plurality of images. As described above, in the personal computer 100, if a plurality of images are instructed to be displayed one after another, a composite image of an appearance in which a newly instructed image is superimposed on an already displayed image is displayed. In the personal computer 100, a top display priority is assigned to an image instructed to be displayed, and stored in the display priority storage unit 151. At this time, if there is an already displayed image, a display priority for the image, stored in the display priority storage unit 151, is moved back by "one." As a result, a display priority of the image newly instructed to be displayed is always top. Also, the display priority may be changed in response to an operation by the user on the main display 101. For example, as illustrated in FIG. 5, if part of a lower-order image appears from under an upper image, when the appearing part is clicked on the main display 101, the display priority of the lower-order image is changed to the top. Also, the display priority stored in the display priority storage unit 151 may be changed by a selection operation for a menu screen, not illustrated. The display priority storage unit 151 corresponds to a predetermined address area in the memory 102 of the personal computer 100 illustrated in FIG. 7 and FIG. 9. The display priority storage unit 151 corresponds to an example of the memory in the first display device of the image display system of the present subject and the information processing apparatus of the present subject.

The image composition unit 152 creates, on the basis of the stored content in the display priority storage unit 151, composite image data Go representing a composite image of an appearance in which an image of a plurality of images, having a lower display priority, is hidden by an image having a higher display priority. The image composition unit 152 is constructed by the CPU 102 of the personal computer 100 illustrated in FIG. 7 and FIG. 9. The image composition unit 152 corresponds to an example of the first display device of the image display system of the present subject and the image composition unit in the information processing apparatus of the present subject.

The first display control unit 153 causes the main display 101 to display the composite image represented by the composite image data Go created by the image composition unit 152. The first display control unit 153 is constructed by the CPU 102 and the graphic controller 107 of the personal computer 100 illustrated in FIG. 7 and FIG. 9. The first display control unit 153 corresponds to an example of the first display device of the image display system of the present subject and the first display control unit of the information processing apparatus of the present subject.

Also, the personal computer 100 includes a designated area receiving unit 154, a position data detecting unit 155, and a position data converting unit 156 as the function blocks.

The designated area receiving unit 154 receives area designation data Iₐ transmitted from the sub-display device 200 through wireless communications using a radio wave. As previously described, the area designation data Iₐ designates the area A1 on the main display 101 using, basically, a device position detected by the aerial mouse 202 or a touch position detected by the touch sensor 203. Thus, the area designation data Iₐ includes position data Iₛ representing such a device position or a touch position. In addition, the area designation data Iₐ includes magnification data I_{b}. The magnification data I_{b} is data representing a magnification equal to or greater than "1.0" of an initial size predetermined for the area A1. Also, the designated area receiving unit 154 receives the area designation data Iₐ as well as image designation data I_{g}. The image designation data Ig is data for, when there are a plurality of lower-order images, designating a lower-order image, the data of which is to be sent to the sub-display device 200. The designated area receiving unit 154 is constructed by the transceiver for area designation 105 of the personal computer 100 illustrated in FIG. 7 and FIG. 9.

The position data detecting unit 155 extracts the position data Iₛ from the area designation data Iₐ received by the designated area receiving unit 154. The position data detecting unit 155 is constructed by the CPU 102 of the personal computer 100 illustrated in FIG. 7 and FIG. 9.

The position data converting unit 156 converts the position data Iₛ being extracted by the position data detecting unit 155 and representing a device position or a touch position of the sub-display device 200, into area position data Iₘ representing a position of the area A1 on the main display 101. It is noted that in a process of converting the position data Iₛ into the area position data Iₘ, the magnification data I_{b} included in the area designation data Iₐ is also used. A detail of the converting process will be described later. The position data converting unit 156 is constructed by the CPU 102 of the personal computer 100 illustrated in FIG. 7 and FIG. 9.

Further, the personal computer 100 includes a size storage unit 157, an image data detecting unit 158, an image data converting unit 159, and an image data transmitting unit 160 as the function blocks.

The size storage unit 157 stores the initial size predetermined for the area A1. In the present embodiment, the initial size is set as a screen size of the sub-display 201 in the sub-display device 200. The size storage unit 157 corresponds to the predetermined address area in the memory 103 of the personal computer 100 illustrated in FIG. 7 and FIG. 9.

The image data detecting unit 158 sets, first, at a position represented by the area position data Iₘ, the area A1 having a size obtained by the initial size being multiplied by a magnification represented by the magnification data I_{b}. A detailed process of setting the area A1 will be described later. Next, the image data detecting unit 158 determines image data representing a partial image in the set area A1 for each of one or more images of which the composite image being displayed on the main display 101 is composed. If there is one image instructed to be displayed on the main display 101, the number of item of image data determined here is one. In contrast, if there are a plurality of images instructed to be displayed, a group of a plurality of image data items are determined. However, to simplify explanation, hereinafter, image data determined by the image data detecting unit 158 is referred to as the image data group Gₘ without particularly distinguishing the case of one image to be displayed from that of a plurality of images. The image data detecting unit 158 is constructed by the graphic controller 107 of the personal computer 100 illustrated in FIG. 7 and FIG. 9.

The image data converting unit 159 extracts, first, from the image data group Gₘ determined by the image data detecting unit 158, image data of an image designated by the image designation data Ig. Next, the image data converting unit 159 performs a color matching process on the extracted image data depending upon an output profile of the sub-display 201. Thereby, lower-order image data Gₛ to be transmitted to the sub-display device 200 is completed. The image data converting unit 159 is constructed by the CPU 102 of the personal computer 100 illustrated in FIG. 7 and FIG. 9.

A combination of the image data detecting unit 158 and the image data converting unit 159 corresponds to an example of the first display device of the image display system of the present subject and the lower-order image creating unit in the information processing apparatus of the present subject.

The lower-order image data transmitting unit 160 transmits the lower-order image data Gₛ determined by the image data converting unit 159 to the sub-display device 200 through wireless communications using a radio wave. The lower-order image data transmitting unit 160 is constructed by the transceiver for image 106 of the personal computer 100 illustrated in FIG. 7 and FIG. 9. The lower-order image data transmitting unit 160 corresponds to an example of the first display device of the image display system of the present subject and the image transmitting unit of the information processing apparatus of the present subject.

Also, as illustrated in FIG. 8B, the sub-display device 200 includes an initial position determining unit 251, a position data creating unit 252, a magnification data creating unit 253, an image designation data creating unit 254, and a designated area transmitting unit 255 as the function blocks.

As previously described, the sub-display device 200 may be freely moved by the user, and a device position of the sub-display device 200 may be detected by the aerial mouse 202.

The initial position determining unit 251 determines an initial position of the movement of the sub-display device 200, i.e., the origin of a device position, as a device position at which user touching on the touch sensor 203 is detected in an initial position determining process described later. The initial position determining unit 251 is constructed by the touch sensor 203 and the CPU 208 of the sub-display device 200 illustrated in FIG. 7 and FIG. 9.

The position data creating unit 252 creates position data Iₛ on the basis of a detection result from the aerial mouse 202 or the touch sensor 203. A process of creating the position data Iₛ will be described later. The position data creating unit 252 is constructed by the aerial mouse 202, the touch sensor 203, and the CPU 208 of the sub-display device 200 illustrated in FIG. 7 and FIG. 9.

The magnification data creating unit 253 creates the magnification data I_{b} in response to a user operation to the A button 206, a detail of which will be described later. The magnification data creating unit 253 is constructed by the A button 206 and the CPU 208 of the sub-display device 200 illustrated in FIG. 7 and FIG. 9.

The image designation data creating unit 254 creates the image designation data Ig in response to a user operation to the B button 207, a detail of which will be described later. The image designation data creating unit 254 is constructed by the B button 207 and the CPU 208 of the sub-display device 200 illustrated in FIG. 7 and FIG. 9.

A combination of the position data creating unit 252, the magnification data creating unit 253, and the image designation data creating unit 254 corresponds to an example of an area designating unit in the display device of the present subject.

The designated area transmitting unit 255 transmits a set of the position data Iₛ created by the position data creating unit 252 and the magnification data I_{b} created by the magnification data creating unit 253 to the personal computer 100 as area designation data Iₐ through wireless communications using a radio wave. Also, in the present embodiment, the designated area transmitting unit 255 transmits the area designation data Iₐ with image designation data Ig created by the image designation data creating unit 254 attached thereto. The designated area transmitting unit 255 is constructed by the transceiver for area designation 204 and the CPU 208 of the sub-display device 200 illustrated in FIG. 7 and FIG. 9. The designated area transmitting unit 255 corresponds to an example of the designated area transmitting unit in the display device of the present subject.

Also, the sub-display device 200 includes a lower-order image data receiving unit 256 and a second display control unit 257 as the function blocks.

The lower-order image data receiving unit 256 receives the lower-order image data Gₛ transmitted from the personal computer 100 through wireless communications using a radio wave. The lower-order image data receiving unit 256 is constructed by the transceiver for image 205 of the sub-display device 200 illustrated in FIG. 7 and FIG. 9. The lower-order image data receiving unit 256 corresponds to an example of the second display device of the image display system of the present subject and the image receiving unit in the display device of the present subject.

The second display control unit 257 causes the sub-display 201 to display a partial image represented by the lower-order image data Gₛ received by the lower-order image data receiving unit 256. The second display control unit 257 is constructed by the CPU 208 and the graphic controller 210 of the sub-display device 200 illustrated in FIG. 7 and FIG. 9. The second display control unit 257 corresponds to an example of the second display device of the image display system of the present subject and the second display control unit in the display device of the present subject.

The image displaying process executed in the image display system 2 including the above-described function blocks will be described in detail below, though some of which is redundant.

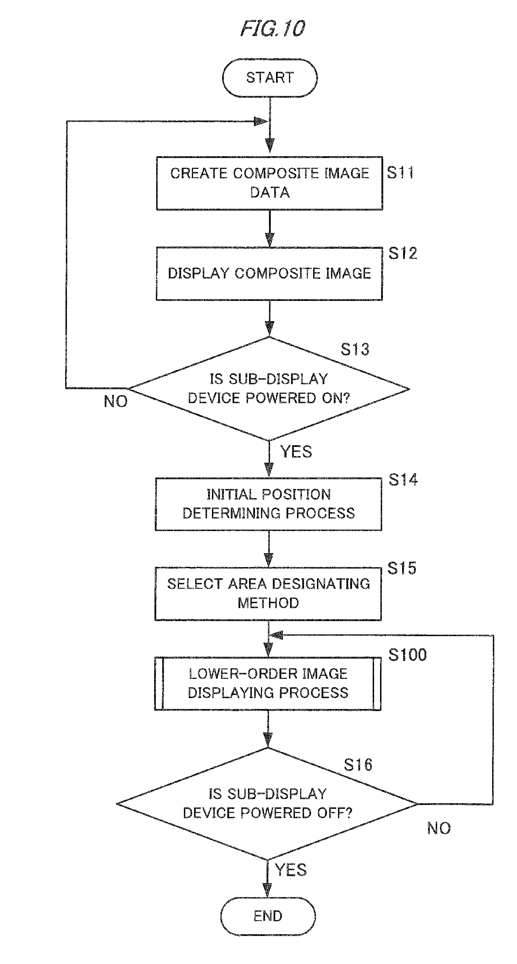

FIG. 10 is a flow chart depicting a flow of the image displaying process executed by the image display system having the function blocks illustrated in FIG. 8A and FIG. 8B.

The image displaying process depicted by the flow chart corresponds to the second embodiment of the present subject image display method.

The image displaying process depicted by the flow chart is started when the personal computer 100 of the image display system 2 is powered on.

Once the processing is started, first, the image composition unit 152 creates, on the basis of stored content in the display priority storage unit 151, composite image data Go representing a composite image of images instructed to be displayed on the main display 101 (step S11).

Next, the first display control unit 153 causes the main display 101 to display the composite image represented by the composite image data Go created by the image composition unit 152 (step S12).

Until the sub-display device 200 is powered on (No in step S13), the processing in step S11 and the processing in step S12 are repeatedly executed.

Once the sub-display device 200 is powered on (Yes in step S13), first, the initial position determining unit 251 executes an initial position determining process described below (step S14).

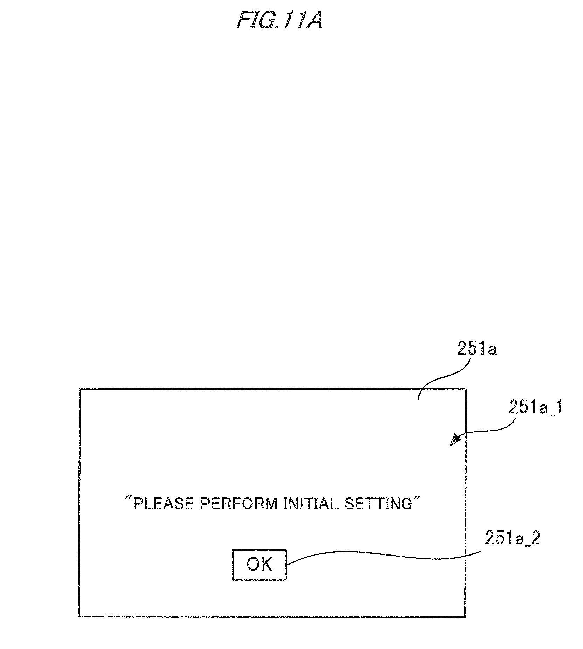

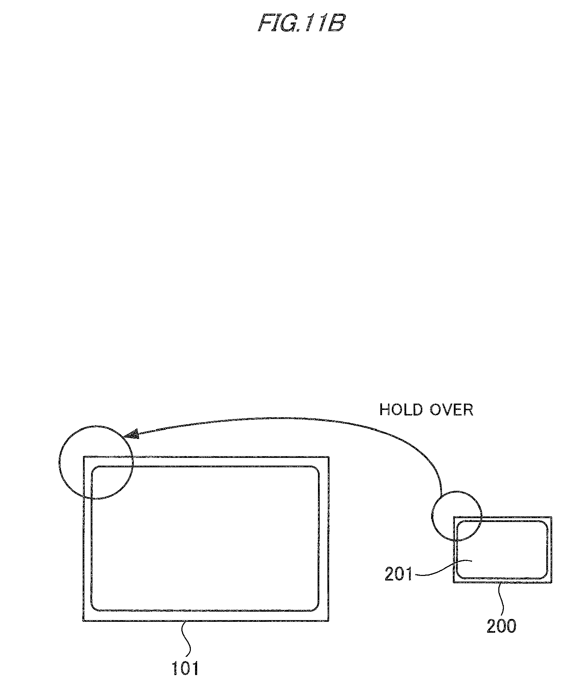

FIG. 11A and FIG. 11B are diagrams schematically illustrating the initial position determining process.

As previously described, the initial position determining unit 251 determines an initial position of the movement of the sub-display device 200 as a device position at which user touching to the touch sensor 203 is detected. Thus, first, the initial position determining unit 251 requests the user to move the sub-display device 200 to a desired initial position and touch the moved sub-display 201 by displaying an initial screen 251a as described below.

FIG. 11A illustrates an initial screen 251a displayed by the initial position determining unit 251 on the sub-display 201. As illustrated in FIG. 11A, the initial screen 251a displaysa message 251a_1 of "Please perform initial setting." Also, at a lower side of the message 251a_1, an OK button 251a_2 is placed which is touched by the user when the sub-display device 200 reaches a desired initial position.

FIG. 11B illustrates an example of an operation the message 251a_1 prompts the user to do. In an example of FIG. 11B, the user desires, as an initial position, a position at which an upper left corner of the main display 101 in the figure overlaps an upper left corner of the sub-display device 200. Then, when the user moves the sub-display device 200 to the desired position and touches the OK button 251a_2 in the initial screen 251a, the touch is detected by the touch sensor 203. Then, the initial position determining unit 251 instructs the aerial mouse 202 to start to detect a device position from the touch detection.

The aerial mouse 202 incorporates a three-dimensional acceleration sensor. Through two-time time integration with respect to acceleration of each of XYZ axes, detected at any time using the three-dimensional acceleration sensor, three-dimensional position coordinates are determined with the integration starting position as the origin. If the position data creating unit 252 receives the above-described instruction from the initial position determining unit 251, the two-time integration with respect to acceleration is started from the instruction received time. As a result, the aerial mouse 202 detects a device position (three-dimensional position coordinates) with the origin being an initial position desired by the user.

If the foregoing initial position determining process (S14) is ended, in the flow chart of FIG. 10, an area designating method selecting process described below is executed by the position data creating unit 252 (step S15).

As previously described, in the present embodiment, the area A1 on the main display 101 is designated, basically, by using a device position detected by the aerial mouse 202 or a touch position detected by the touch sensor 203. That is, in the present embodiment, as a method for designating the area A1, there are two types of methods, i.e., a method that uses a device position and a method that uses a touch position. Thus, first, the position data creating unit 252 causes the sub-display 201 to display an area designating method selection screen that allows the user to determine which of these two types of methods is used to designate the area A1.

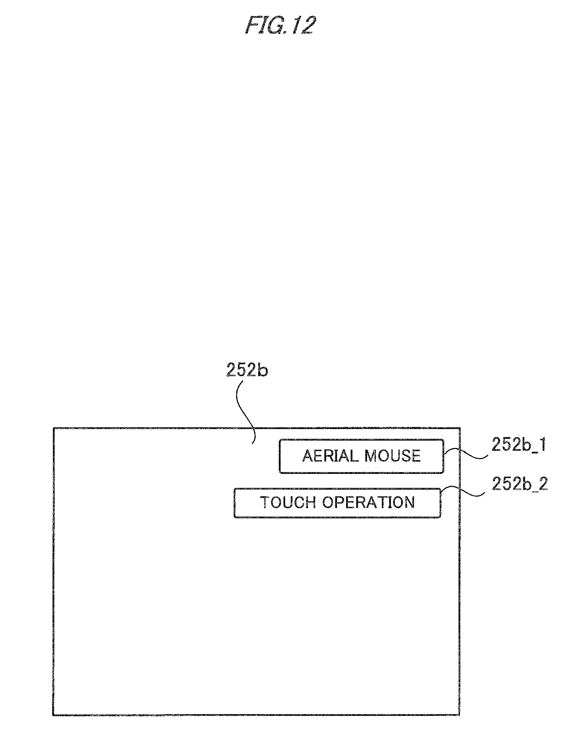

FIG. 12 is a diagram illustrating the area designating method selection screen displayed on the sub-display by the position data creating unit.

The area designating method selection screen 252b is provided with an aerial mouse designating button 252b_1 touched by the user to designate the method that uses a device position. In addition, the area designating method selection screen 252b is also provided with a touch operation designating button 252b_2 touched by the user to designate the method that uses a touch position.

When the user touches any one of the two buttons, the position data creating unit 252 grasps the area designating method selected by the user on the basis of the touch position detected at this time.

When an area designating method is selected in the area designating method selecting process (S15), in the flow chart of FIG. 10, a lower-order image displaying process being a subroutine described below is executed (step S100).

If the lower-order image displaying process (step S100) is executed, as illustrated in FIG. 5, a partial image of a designated area in a lower-order image Gb is displayed on the sub-display 201 of the sub-display device 200. Then, the lower-order image displaying process (step S100) is repeatedly executed until the sub-display device 200 is powered off (Yes in step S16).

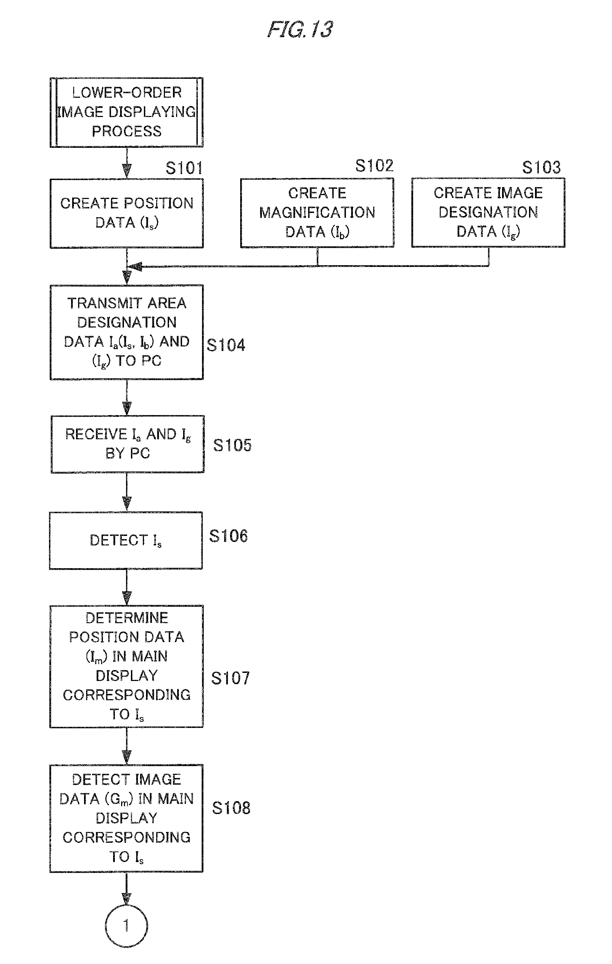

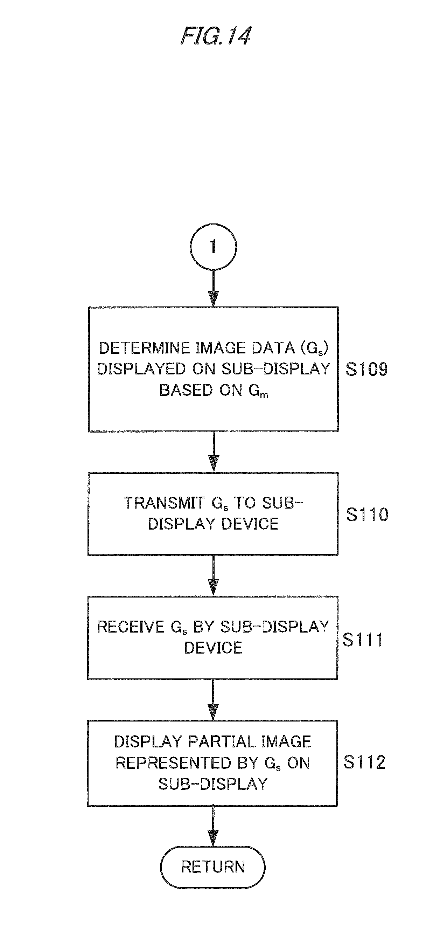

FIG. 13 is a first half of a flow chart depicting a flow of the lower-order image displaying process. FIG. 14 is a second half of the flow chart.

When the lower-order image displaying process is started, the position data creating unit 252 creates position data Iₛ by the area designating method selected in the area designating method selecting process (S15) (S101).

First of all, creating position data Iₛ will be described. This creation occurs when the method for designating the area A1 using a device position (three-dimensional position coordinates) detected by the aerial mouse 202 is designated as an area designating method.

In this method, a device position (three-dimensional position coordinates) detected by the aerial mouse 202 is directly adopted as the position data Iₛ included in area designation data. In the present embodiment, the position data Iₛ representing a device position is handled as data for designating a position of the area A1 on the main display 101 as described below.

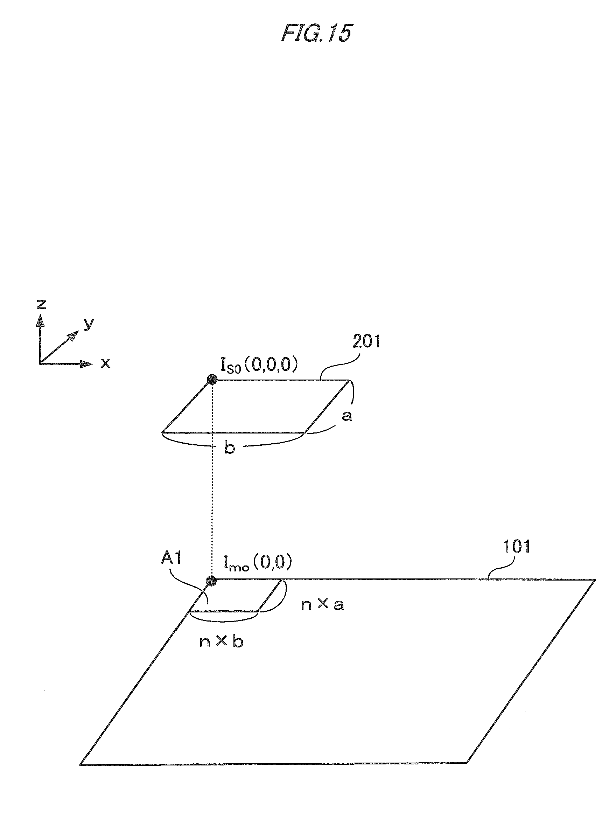

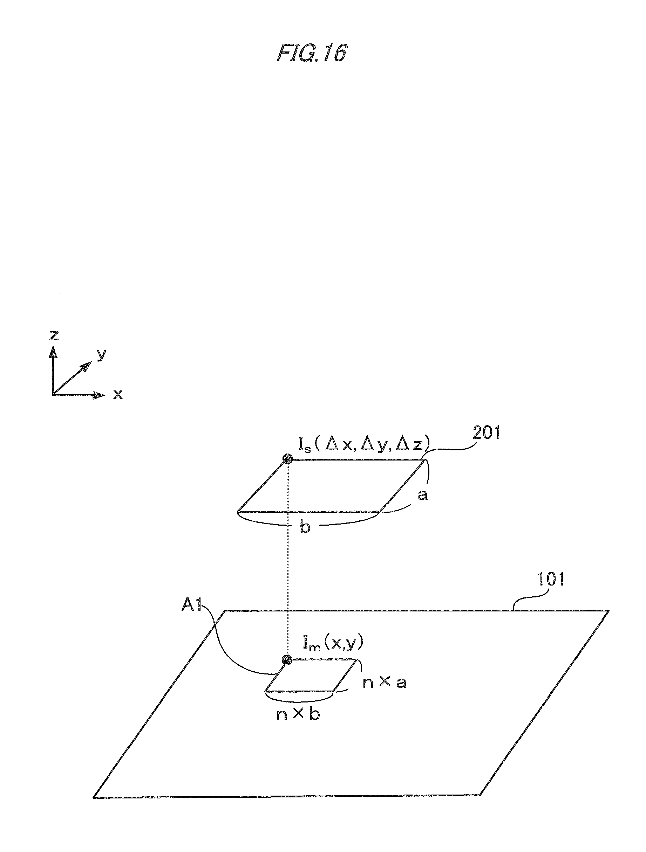

FIG. 15 is a diagram illustrating a correspondence between position data representing an initial position of the sub-display device and an initial position in an area on the main display. Also, FIG. 16 is a diagram illustrating a correspondence between position data representing any device position of the sub-display device and a position of the area on the main display.

In the present embodiment, a device position (three-dimensional position coordinates) detected by the aerial mouse 202 is handled as an upper left corner position of the sub-display 201 in the figure. Also, the position of the area A1 on the main display 101 refers to an upper left corner position of the area A1 in the figure.

It is noted that in the present embodiment, an initial position of the area A1 on the main display 101 is predetermined as the upper left corner on the main display 101 in the figure.

Then, xy components in position data Iₛ₀(0,0,0) representing an initial position of the sub-display device are handled as area position data Iₘ₀(,0,0) representing the initial position of the area A1 on the main display 101. Further, in the present embodiment, basically, xy components in position data Iₛ (Δx,Δy,Δz) representing any position of the sub-display device are handled as described below. That is, the xy components are handled as area position data Iₘ(x,y) representing any position of the area A1 on the main display 101.

As previously described, from the designated area transmitting unit 255 in FIG. 8B, as the area designation data Iₐ for designating the area A1 on the main display 101, a set of the position data Iₛ and magnification data I_{b} is transmitted. In the present embodiment, the magnification data I_{b} is created in response to a user operation to the A button 206 described below, but when there is no user operation, the magnification data I_{b} represents a unity magnification of "1." In this case, as described above, the xy components of the position data Iₛ are handled as area position data Iₘ. In contrast, if there is a user operation to the A button 206 and the magnification data I_{b} represents a magnification other than "1," the xy components of the position data Iₛ are handled as described below. In this case, data obtained by the xy components being multiplied by a coefficient depending on a magnification represented by the magnification data I_{b} is handled as the area position data Iₘ. In the present embodiment, as the coefficient, a coefficient having a value being lower as the magnification becomes larger is used.

Also, in the present embodiment, as previously described, the size obtained by multiplying an initial size equal to a screen size of the sub-display 201 by a magnification equal to or greater than "1.0" represented by magnification data I_{b} is handled as the size of the area A1. Thus, in the present embodiment, the area A1 is always larger than the sub-display 201. It is noted that in FIG. 15 and FIG. 16, for visual convenience, the sub-display 201 is depicted to be larger than actual one as compared with the main display 101. Thus, in each drawing, the area A1 on the main display 101 is smaller than the sub-display 201, though the size relationship is inverse in fact.

Next, position data Iₛ will be described that is created when the method for designating the area A1 using a touch position detected by the touch sensor 203 is designated as an area designating method.

It is noted that in the present embodiment, as a touch operation to the sub-display 201, i.e., the touch sensor 203 for designating the area A1 by this method, the following operation is adopted.

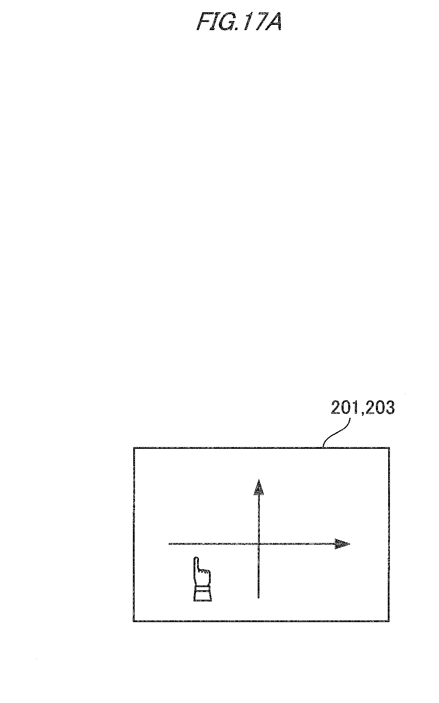

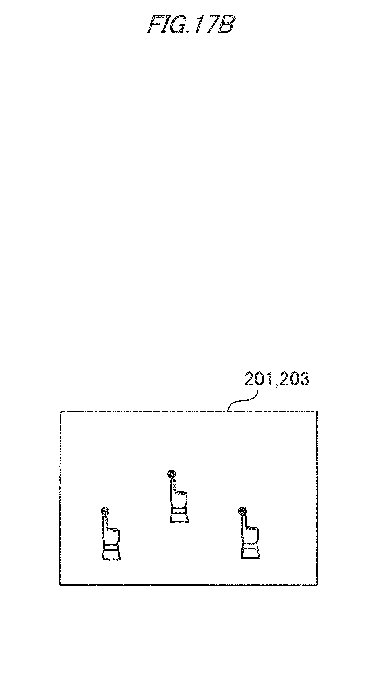

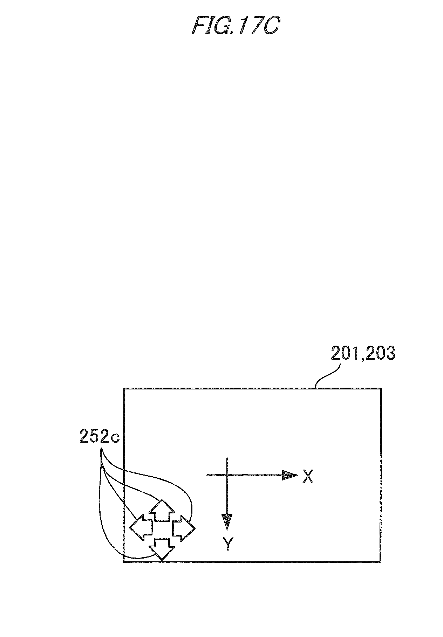

FIG. 17A, FIG. 17B, and FIG. 17C are schematic diagrams illustrating a touch operation to the touch sensor.

FIG. 17A illustrates the touch operation adopted in the present embodiment. In FIG. 17B and FIG. 17C, two examples of possible other touch operations are illustrated.

The touch operation in the present embodiment illustrated in FIG. 17A is an operation that the user moves a finger along the sub-display 201, i.e., the touch sensor 203. In the touch operation, using a touch position detected at any time for a moving finger along the touch sensor 203, position data Iₛ is created as described below.

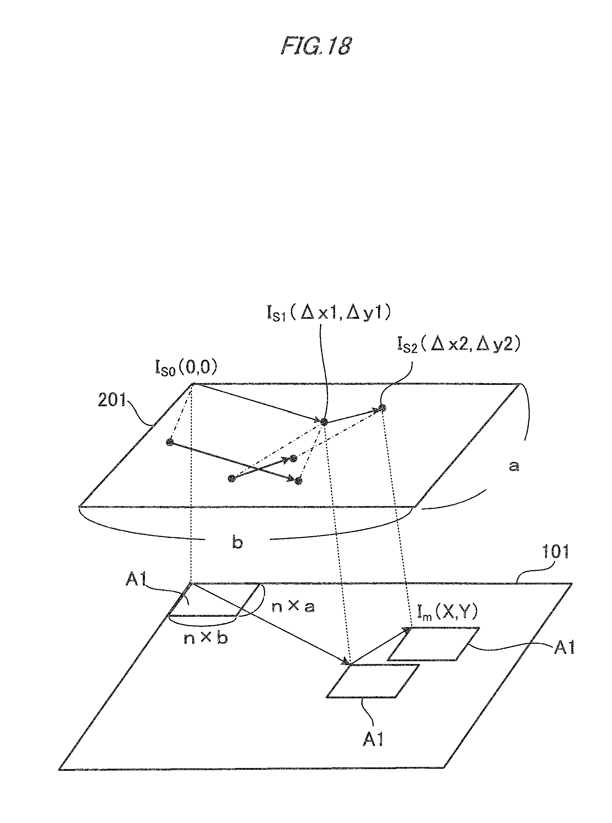

FIG. 18 is a diagram schematically illustrating position data creation that uses a touch position.

It should be noted that also in FIG. 18, in the same manner as the FIG. 15 and FIG. 16, for visual convenience, the sub-display 201 is depicted to be larger than actual one as compared with the main display 101.

In the present embodiment, the origin on the sub-display 201, i.e., the origin on the touch sensor 203 is set as an upper left corner of the touch sensor 203 in the figure.

When the user moves a finger along the touch sensor 203, two-dimensional coordinates representing a touch position of the moving finger with respect to the origin are detected by the touch sensor 203.

It is noted that as previously described, in the present embodiment, an initial position of the area A1 on the main display 101 is predetermined as the upper left corner on the main display 101 in the figure. Further, in the present embodiment, the position data Iₛ₀(0,0) representing the origin on the sub-display 201 is handled as the area position data Iₘ₀(0,0) representing the initial position of the area A1 on the main display 101.

Thus, in the present embodiment, for a finger moving along the touch sensor 203 for the first time after a touch operation is selected as a method for designating the area A1, position data Iₛ is created by turning the movement of the finger into movement having a starting point of the origin on the sub-display 201.

That is, two-dimensional coordinates representing a position of a touch position (two-dimensional coordinates) detected for a moving finger, the touch position being translated so that a starting point of the finger's movement is the origin on the sub-display 201, are determined as position data Iₛ₁(Δx1, Δy1).

Next, for a finger releasing the touch sensor 203 and thereafter touching the touch sensor 203 again to be moved along the touch sensor 203, position data Iₛ is created by turning the finger movement into movement having a starting point of an ending position of the previous movement.

That is, two-dimensional coordinates representing a position of a touch position (two-dimensional coordinates) detected for a moving finger, the touch position being translated so that a starting point of the finger movement is an ending position of the previous movement, are determined as position data Iₛ₂(Δx2, Δy2).

If the touch operation is selected as a method for designating the area A1, the position data Is is determined in this manner. Then, in the present embodiment, basically, position data Iₛ(Δx, Δy) representing a moving finger's position is handled in the following manner. That is, data obtained by multiplying the position data Iₛ(Δx, Δy) by a predetermined coefficient is handled as area position data Iₘ(x,y) representing any position of the area A1 on the main display 101. Note that the coefficient is calculated on the basis of a ratio between the size of the sub-display 201 and the size of the main display 101.

Note that examples of the touch operation include the touch operation adopted in the present embodiment and illustrated in FIG. 17A as well as other touch operations illustrated in FIG. 17B and FIG. 17C.

The touch operation illustrated in FIG. 17B is an operation that the user touches a desired position on the sub-display 201 (the touch sensor 203). In the touch operation, two-dimensional position coordinates representing a touch position detected by the touch sensor 203 are directly adopted as the position data Iₛ.

Also in this touch operation, the origin of the sub-display 201, i.e., the origin of the touch sensor 203 is set at the upper left corner of the touch sensor 203 in the figure. The position data Iₛ₀(0,0) representing the origin is handled as area position data Iₘ₀(0,0) representing the initial position of the area A1 on the main display 101. Also in the touch operation illustrated in FIG. 17C described later, the origin is handled in the same manner.

Then, data obtained by multiplying a predetermined coefficient by the position data Iₛ representing a touch position detected by the touch sensor 203 is handled as area position data Iₘ representing any position of the area A1 on the main display 101. The coefficient is calculated on the basis of a ratio between the size of the sub-display 201 and the size of the main display 101.

In the touch operation illustrated in FIG. 17C, the position data creating unit 252 in FIG. 8B causes the sub-display 201 to display four direction keys 252c respectively representing four, vertical and horizontal, directions on the sub-display 201. The four direction keys 252c respectively correspond to any of positive directions and negative directions of the XY axes.

When the user touches any of the direction keys 252c, on the basis of a touch position detected by the touch sensor 203, the position data creating unit 252 grasps the one of the direction keys 252c that is touched by the user.

If the touch to the direction keys 252c is a first touch coming after the touch operation is designated as an area designating method, the position data creating unit 252 performs the following processing on the position data Iₛ₀ representing the origin to obtain the position data Iₛ. That is, a predetermined increment value is added or subtracted to/from any of XY components of position data Iₛ₀ representing the origin, the component corresponding to grasped one of the direction keys 252c. The processing is addition processing when the direction key 252c corresponds to the positive direction, and when the direction key 252c corresponds to the negative direction, the processing is subtraction processing. It is noted that the increment value is an amount of the movement of the area A1 along the main display 101 per touch to the direction keys 252c.

If the touch to the direction keys 252c is a second or later touch coming after the touch operation is designated as an area designating method, the addition processing or the subtraction processing described above is performed on position data Iₛ of the previous touch.

In the touch operation illustrated in FIG. 17C, by the addition or subtraction processing depending on the direction key 252c touched by the user, the position data Iₛ at the time of the touch is determined. Then, the position data Iₛ representing the touch position detected by the touch sensor 203 is directly handled as area position data Iₘ representing any position on the area A1 on the main display 101.

This is the end of the description of position data creation. Now, a continuation of the lower-order image displaying process depicted by the flow chart in FIG. 13 and FIG. 14 will be described.

In the present embodiment, if the A button 206 is operated to designate a desired magnification to an initial size of the area A1, magnification data I_{b} representing the magnification corresponding to the button operation is created by the magnification data creating unit 253 in FIG. 8 (step S102).

Also, if the B button 207 is operated to designate a desired image, a partial image of which is displayed on the sub-display 201, image designation data Ig for designating an image corresponding to the button operation is created by the image designation data creating unit 254 in FIG. 8B (step S103).

In the present embodiment, these two processes are interrupt processes executed in response to a user operation onto the A button 206 or the B button 207.

First, a button operation for designating a magnification will be described.

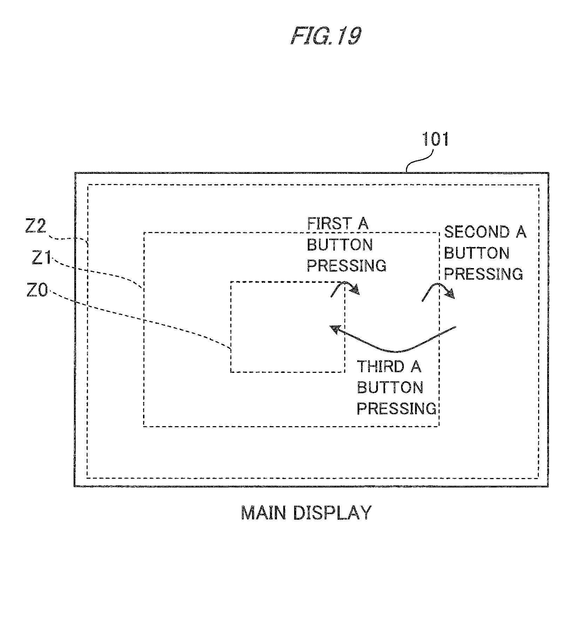

FIG. 19 is a schematic diagram illustrating the button operation for designating a magnification.

In the present embodiment, the A button 206 may be operated to designate three types of magnifications: a unity magnification, a first magnification, and a second magnification.

The first magnification is a magnification which enlarges an initial size Z0 to a middle size (an intermediate size Z1) between the initial size Z0 and the size of the main display 101. Also, the second magnification is a magnification which enlarges the initial size Z0 to a large size Z2, being substantially the same size as that of the main display 101.

When the size of the area A1 is the initial size Z0, if the A button 206 is once touched, the first magnification is designated, and the magnification data creating unit 253 in FIG. 8B creates magnification data I_{b} representing the first magnification. If the A button 206 is touched once again (twice in total), now the second magnification is designated, and the magnification data creating unit 253 creates magnification data I_{b} representing the second magnification. If the A button 206 is touched yet again (three times in total), now a unity magnification is designated, and the magnification data creating unit 253 creates magnification data I_{b} representing the unity magnification.

In the present embodiment, in this manner, each time the A button 206 is touched, the three types of magnifications are cyclically designated in this order: the first magnification, the second magnification, and the unity magnification. At each designation, the magnification data creating unit 253 creates magnification data I_{b} representing each magnification.

Next, a button operation for designating an image will be described.

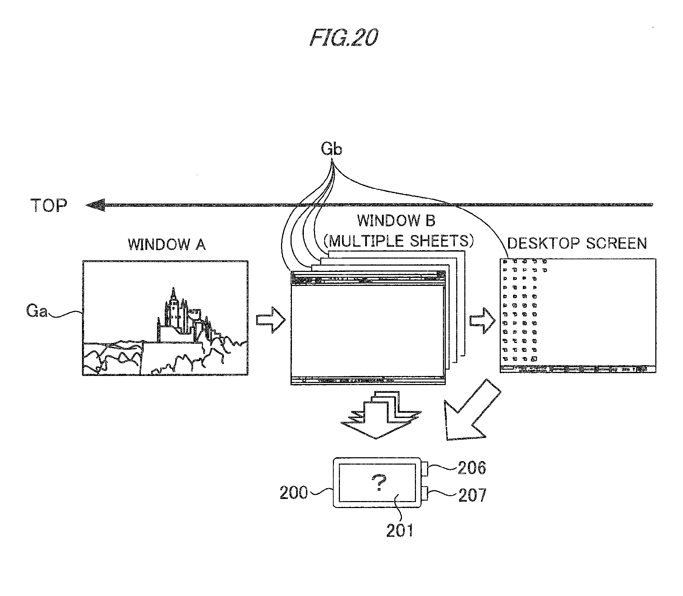

FIG. 20 is a schematic diagram illustrating the button operation for designating an image.

In the present embodiment, a plurality of the lower-order images Gb being second or lower in display priority may be under the upper image Ga being top in display priority. Examples of the lower-order images Gb include window screens deployed on the main display 101 in accordance with a variety of applications and a so-called desktop screen on which a plurality of icons are arranged. If there may be such a plurality of lower-order images Gb, a desired one may be designated from the plurality of lower-order images Gb in the following manner. A partial image of the designated image will be displayed on the sub-display 201.

First, at an early stage in which a desired lower-order image Gb is not particularly designated, the image designation data I_{g} is for designating a lower-order image being second in display priority.

If the B button 207 is once touched at this stage, a lower-order image being third in display priority is designated, and image designation data Ig for designating the third lower-order image is created by the image designation data creating unit 254 in FIG. 8B. If the B button 207 is touched once again, now a lower-order image being fourth in display priority is designated, and image designation data I_{g} for designating the fourth lower-order image is created. In the present embodiment, in this manner, each time the B button 207 is touched, a lower-order image having a display priority level lower than a previous image by 1 is designated, and image designation data Ig for designating the lower-order image is created. Then, after a lower-order image being lowest in display priority (in many cases, a desktop screen) is designated, if the B button 207 is touched yet again, the designated lower-order image is returned to a lower-order image being second in display priority.

In the present embodiment, in this manner, each time the B button 207 is touched, lower-order images are cyclically designated in the order of display priority. At each designation, the image designation data creating unit 254 creates image designation data Ig for representing a lower-order image.

This is the end of the description of the button operations for designating a magnification and a lower-order image. Now, a continuation of the lower-order image displaying process depicted by the flow chart in FIG. 13 and FIG. 14 will be described.

In the flow chart, if position data Iₛ is created in step S101, the designated area transmitting unit 255 in FIG. 8B transmits area designation data Iₐ and image designation data I_{g} to the personal computer 100 (step S104). The area designation data Iₐ transmitted at this time is a set of the position data Iₛ created in step S101 and magnification designation data I_{b} as described below. This magnification data I_{b} is magnification data I_{b} representing a unity magnification at an early stage or magnification data I_{b} representing a desired magnification created in an interrupt process in step S102 executed before this time.

Also, the image designation data Ig transmitted with the area designation data Iₐ in step S104 is as follows.

This image designation data Ig is image designation data Ig at an early stage for designating a lower-order image being second in display priority or image designation data Ig representing a desired lower-order image created in an interrupt process in step S103 executed before this time.

If the area designation data Iₐ and the image designation data Ig are transmitted in step S104 in this manner, these data items are received by the designated area receiving unit 154 in the personal computer 100 (step S105).

Next, the position data detecting unit 155 extracts the position data Iₛ from the received area designation data Iₐ (step S106). Then, the position data converting unit 156 converts the position data Iₛ into area position data Iₘ for designating a position of the area A1 on the main display 101 (step S107).

In step S107, when the area designating method is a method that uses a device position, as described with reference to FIG. 15 and FIG. 16, basically, xy components of the position data Iₛ representing three-dimensional position coordinates are handled as the area position data Iₘ. Also, when the magnification data I_{b} represents a magnification other than "1," data obtained by multiplying the xy components of the position data Iₛ by a coefficient corresponding to a magnification represented by the magnification data I_{b} is handled as the area position data Iₘ.

Also, in step S107, when the area designating method is a method that uses a touch position, as described with reference to FIG. 18, basically, data obtained by multiplying position data Iₛ representing a position of a moving finger by a predetermined coefficient is handled as the area position data Iₘ. The coefficient multiplied by the position data Iₛ is a coefficient calculated on the basis of a size ratio between the sub-display 201 and the main display 101.

In step S107, when the area position data Iₘ is determined in this manner, the image data detecting unit 158 determines the image data group Gₘ for the area A1 of the position represented by the area position data Iₘ (step S108).

Then, the image data converting unit 159 extracts from the image data group Gₘ image data representing a partial image of a lower-order image designated by the image designation data Ig. Then, the image data converting unit 159 performs on the extracted image data a color matching process depending on an output profile of the sub-display 201. According to the foregoing processes, the lower-order image data Gₛ transmitted to the sub-display device 200 is completed (step S109).

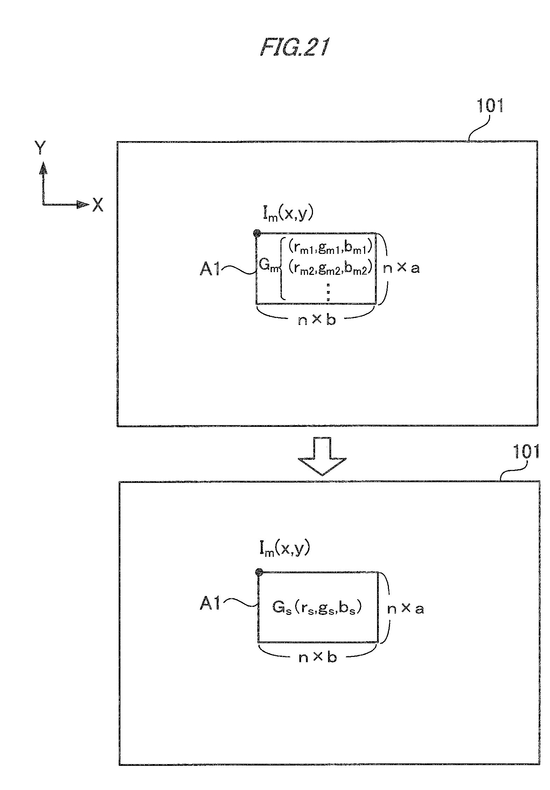

FIG. 21 is a diagram schematically illustrating an image data group and lower-order image data determined from the image data group.

As previously described, the image data group Gₘ determined by the image data detecting unit 158 is a group of the image data items representing the partial images in the areas A1 of each images of which the composite image displayed on the main display 101 is composed. FIG. 18 illustrates, as the image data group Gₘ, a group of a plurality of image data items representing partial images in areas A1 of each image in an RGB format. Then, in step S109, the lower-order image data Gₛ extracted from the image data group Gₘ depending on the designation by the image designation data Ig and converted into an RGB format depending on the output profile of the sub-display 201 is indicated.

A combination of the foregoing process of the step S108 and process of the step S109 corresponds to an example of a lower-order image creating step in the image display method of the present subject.

The lower-order image data Gₛ determined in step S109 of FIG. 14 in this manner is transmitted to the sub-display device 200 by the lower-order image data transmitting unit 160 (step S110). The process in step S110 corresponds to an example of the image transmitting step in the image display method of the present subject.

The lower-order image data Gₛ transmitted in this manner is received by the lower-order image data receiving unit 256 of the sub-display device 200 (step S111). The process of the step S111 corresponds to an example of the image receiving step in the image display method of the present subject.

Then, a partial image represented by the received lower-order image data Gₛ is displayed on the sub-display 201 by the second display control unit 257 of the sub-display device 200 (step S112). Also, in the process of the step S112, the second display control unit 257 scales, depending on the size of the sub-display 201, a partial image to be displayed so as to be included in a full screen of the sub-display 201. The process of the step S112 corresponds to an example of the display control step in the present subject image display method.

When the step S112 is terminated, the lower-order image displaying process (step S100), which is a subroutine of the flow chart in FIG. 6, comes to an end, and the processing returns to a main routine depicted by the flow chart in FIG. 6.

Then, as previously described, in the main routine, the lower-order image displaying process (step S100) is repeatedly executed until the sub-display device 200 is powered off.

According to the image displaying process as described with reference to FIG. 6 to FIG. 21, the following image display is performed in the image display system 2 illustrated in FIG. 4.

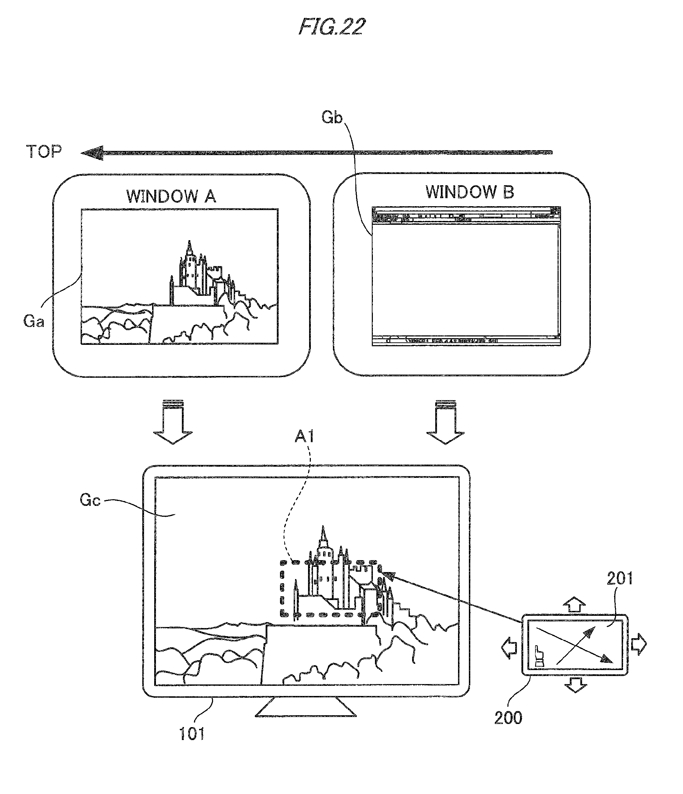

FIG. 22 is a diagram schematically illustrating an example of the image display performed in the image display system in FIG. 4.

In the example in FIG. 22, a composite image Gc is displayed on the main display 101, and the composite image Gc has, as lower-order images Gb, window screens depending on a variety of applications and a desktop screen, an example of which is illustrated in FIG. 20, and video or the like as an upper image Ga. Note that a window screen of the two lower-order images Gb is second in display priority and a desktop screen of the two lower-order images Gb is third in display priority. Also, in the example in FIG. 22, the composite image Gc is generally occupied by the upper image Ga, and the two lower-order images Gb are completely hidden by the upper image Ga.

In this state, when the sub-display device 200 is powered on and user operations are performed for the initial position determining process (step S14) and the selection of area designating method (step S15), a partial image is displayed on the sub-display 201 in the following way.

Specifically, in the present embodiment, depending on the selected area designating method, the area A1 is set based on a device position of the sub-display device 200 or a touch position of a finger on the sub-display 201 after the selection. Then, a partial image in the area A1 of the lower-order image Gb hidden by the upper image Ga on the main display 101 is displayed on the sub-display 201. On the other hand, on the main display 101, the composite image Gc is still displayed. Namely, according to the image display system 2 of the present embodiment, without disturbing an appearance in which an image desired to view is hidden by another image, the image of the image desired to view can be viewed.

Also, in the present embodiment, an area A1 on the main display 101 is designated to be freely movable in response to the movement of the sub-display device 200 caused by the user or the finger movement along the sub-display 201. Then, area designation data Iₐ (a set of position data Iₛ and magnification data I_{b}) representing the area A1 designated in this manner is transmitted to the main display device 100. In the main display device 100, the area designation data Iₐ is received, and lower-order image data Gₛ representing a partial image in the area A1 based on the area designation data Iₐ is created for a lower-order image Gb. According to such a configuration, in the present embodiment, a partial image of a desired area A1 in a lower-order image Gb can be viewed by using a small sub-display device 200.

This means that the following applied embodiment is suitable for the image display system and information processing apparatus of the present subject. In this applied embodiment, the second display device includes an area designating unit and a designated area transmitting unit. The area designating unit designates an area on the display screen of the first display device to be freely movable in response to an operation by the operator. Also, the designated area transmitting unit transmits, to the first display device, area designation data representing the area on the display screen of the first display device, designated by the area designating unit. Further, in this applied embodiment, the first display device includes a designated area receiving unit that receives the area designation data transmitted from the second display device. Also, in this applied embodiment, the lower-order image creating unit creates the following lower-order image data for one of images being second or lower in display priority. Specifically, the lower-order image data represents a partial image of an area, in the one image, based on the area designation data received by the designated area receiving unit.

A combination of the position data creating unit 252 and the magnification data creating unit 253 illustrated in FIG. 8B in the present embodiment corresponds to an example of the area designating unit in this applied embodiment. Also, the designated area transmitting unit 255 illustrated in FIG. 8B corresponds to an example of the designated area transmitting unit in this applied embodiment. Also, the designated area receiving unit 154 illustrated in FIG. 8A corresponds to an example of the designated area receiving unit in this applied embodiment. Further, a combination of the image data detecting unit 158 and the image data converting unit 159 illustrated in FIG. 8A corresponds to an example of the lower-order image creating unit in this applied embodiment.

Also, in the present embodiment, as one of area designating methods, a method for designating the area A1 using a device position detected by the aerial mouse 202 is adopted.

In this method, the aerial mouse 202 detects a device position at a certain time point during the movement of the sub-display device 200 moved by the user, and position data Iₛ representing the device position is used to designate the area A1 at this time point. This position data Iₛ is three-dimensional position coordinates representing a device position at a certain time point and is data indirectly representing a movement direction and a movement amount of the moving sub-display device 200.

The area A1 designated by such position data Iₛ is a moved area resulting from moving a previously designated area before being moved, in a movement direction corresponding to the movement direction represented by the position data Iₛ by a movement amount corresponding to the movement amount represented by the position data Iₛ.

In the present embodiment, such designation of the area A1 is repeatedly performed, and thereby the area A1 on the main display 101 is moved to follow the movement of the sub-display device 200. Accordingly, the user can move the sub-display device 200 while viewing a partial image on the sub-display 201 to move the area A1 to a position at which a desired partial image is displayed.

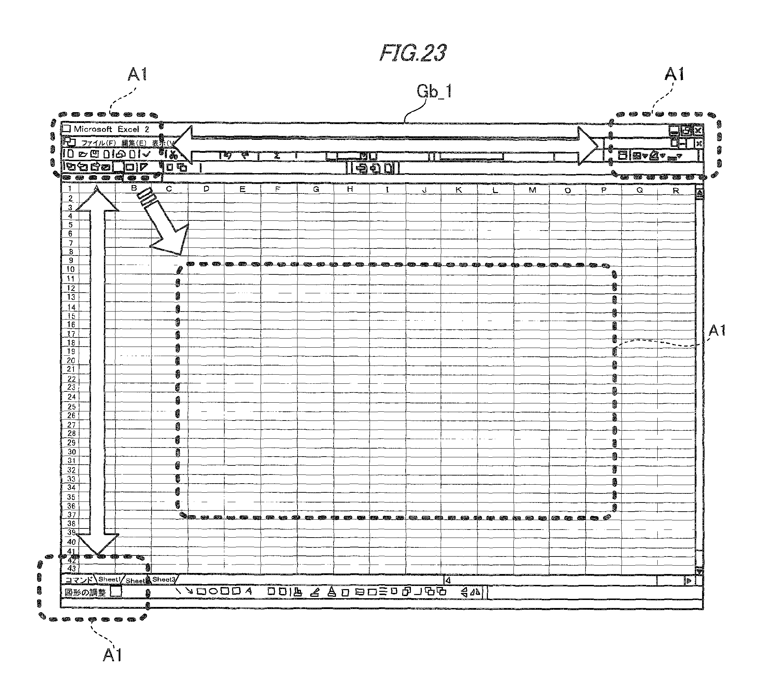

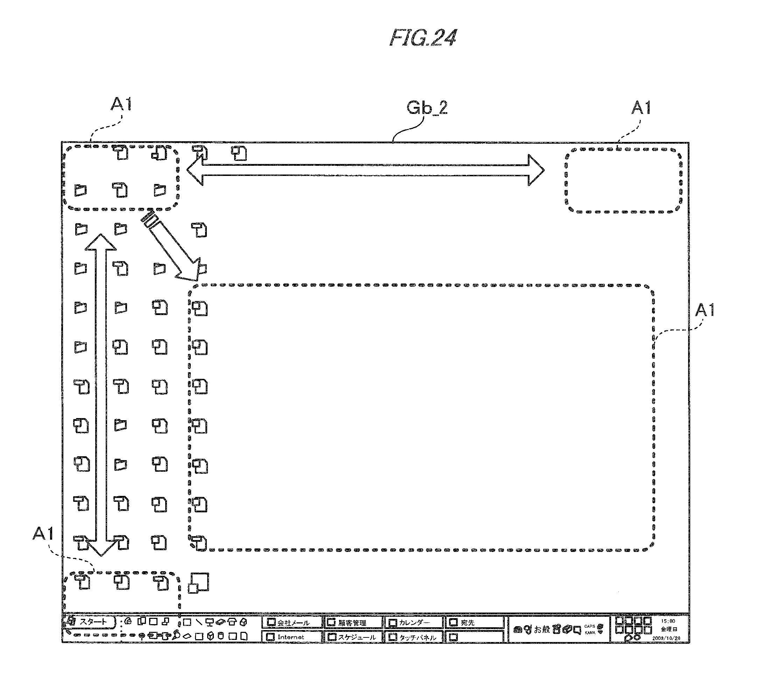

FIG. 23 is a schematic diagram illustrating how an area of a window screen that is a lower-order image being second in display priority is set in the example of FIG. 22. Also, FIG. 24 is a schematic diagram illustrating how an area of a desktop screen that is a lower-order image being third in display priority is set in the example of FIG. 22.

For example, when an area designating method that uses a device position is adopted to set an area of a window screen Gb_1, the user moves the sub-display device 200 to move the area A1 to a position at which a desired operation icon or the like is displayed. Similarly, as to a desktop screen Gb_2, the user may move the area A1 to a position at which a desired file icon or the like is displayed.

In the present embodiment, when merely the aerial mouse 202 is used to designate the area A1 and the touch sensor 203 is not used to designate the area A1, a touch operation as described below is allowed for a partial image displayed on the sub-display 201.

Specifically, when the user touches an operation icon or a file icon in a partial image displayed on the sub-display 201, a touched position is detected by the touch sensor 203 and sent to the personal computer 100. In the personal computer 100, on the basis of the sent touch position, the operation icon or the file icon touched by the user is grasped. Then, an operation or file opening corresponding to the touched operation icon or the file icon is performed. However, when a new image is displayed on the main display 101 as a result of the operation, a second display priority level is assigned to the image. In addition, display priority levels of images being second or lower in display priority before the operation are moved down by "1." As a result of such a process, even if such a new image is displayed, a displayed appearance on the main display 101 is maintained in original condition.

In the foregoing method for designating the area A1 using a device position, the movement of the sub-display device 200 and the movement of the area A1 along the main display 101 substantially match. Thus, according to the method, the following operation that is intuitively easy for the user to understand is allowed. Specifically, the method allows for an operation to hold the sub-display device 200 over a desired position on the main display 101 to see through a partial image at the position in the lower-order image Gb.

This means that the following applied embodiment is suitable for the image display system, the information processing apparatus, and the display device of the present subject. In this applied embodiment, the second display device is freely movable by the operator, and further includes a movement sensor that detects a movement direction and a movement amount of the second display device. In this applied embodiment, the area designating unit designates an area as described below on the basis of the movement direction and the movement amount detected by the sensor. The area designating unit designates a moved area resulting from moving, along the display screen as described below, an area before being moved on the display screen of the first display device. That is, the area designating unit designates a moved area resulting from moving an area before being moved, in a movement direction corresponding to the movement direction detected by the movement sensor by a movement amount corresponding to the movement amount detected by the movement sensor.

The aerial mouse 202 illustrated in FIG. 4 corresponds to an example of the movement sensor in this applied embodiment. Also, a combination of the position data creating unit 252 and the magnification data creating unit 253 illustrated in FIG. 8B corresponds to an example of the area designating unit in this applied embodiment.

Also, in the present embodiment, as one of area designating methods, a method for designating the area A1 using touch positions of a finger moving along the sub-display 201, i.e., along the touch sensor 203 is adopted.

In this method, as described with reference to FIG. 18, touch positions of the moving finger detected by the touch sensor 203 are moved by translating a starting point of the movement to the origin or an ending position of the previous movement, and thereby position data Iₛ representing the translated positions is determined. The position data Iₛ indirectly represents a movement direction and a movement amount of the touch position after touched on the sub-display 201.

In the present embodiment, the area A1 on the main display 101 is designated by the position data Iₛ. The area A1 designated in this manner is a moved area resulting from moving a previously designated area before being moved, in a movement direction corresponding to the movement direction represented by the position data Iₛ by a movement amount corresponding to the movement amount represented by the position data Iₛ.

Also according to the method, the user can move a finger along the sub-display 201 while viewing a partial image on the sub-display 201 to move the area A1 to a position at which a desired partial image is displayed. Also, in this method, because it is not needed to move the sub-display device 200 itself, the area A1 may be moved as described above in a small operation space.

This means that the following applied embodiment is suitable for the image display system, the information processing apparatus, and the display device of the present subject. In this applied embodiment, the second display device includes a touch sensor that detects a movement direction and a movement amount of touch positions on the display screen of the second display device after the operator's touch. Also, in this applied embodiment, the area designating unit designates an area as described below on the basis of the movement direction and the movement amount detected by the touch sensor. The area designating unit designates a moved area resulting from moving, along the display screen of the first display device as described below, an area before being moved along the display screen of the first display device. That is, the area designating unit designates a moved area resulting from moving an area before being moved, in a movement direction corresponding to the movement direction detected by the touch sensor by a movement amount detected by the touch sensor.

The touch sensor 203 illustrated in FIG. 4 corresponds to an example of the touch sensor in this applied embodiment. Also, a combination of the position data creating unit 252 and the magnification data creating unit 253 illustrated in FIG. 8B corresponds to an example of the area designating unit in this applied embodiment.

Also, although not being adopted in the present embodiment, examples of a method for designating an area A1 using a touch operation to the touch sensor 203 include the two methods described with reference to Fig. 17B and FIG. 17C.

In the method illustrated in FIG. 17B, two-dimensional position coordinates of a touch position detected by the touch sensor 203 are directly adopted as position data Iₛ. Then, data obtained by multiplying the position data Iₛ by a predetermined coefficient is handled as area position data Iₘ representing any position of the area A1 on the main display 101. Namely, in this method, the position data Iₛ representing a touch position is data representing a movement direction and a movement amount of the area A1 as it is.

According to the method, by regarding the sub-display 201 as the main display 101, a desired area A1 on the main display 101 can be intuitively designated on the sub-display 201.

This means that the following applied embodiment is suitable for the image display system, the information processing apparatus, and the display device of the present subject. In this applied embodiment, the second display device includes a touch sensor that detects a touch position touched by the operator on the display screen of the second display device. Also, in this applied embodiment, the area designating unit designates an area as described below on the basis of a touch position detected by the touch sensor. The area designating unit designates a moved area resulting from moving, along the display screen as described below, an area before being moved on the display screen of the first display device. That is, the area designating unit designates a moved area resulting from moving an area before being moved, in a movement direction corresponding to the touch position detected by the touch sensor by a movement amount corresponding to the touch position.

The touch sensor 203 illustrated in FIG. 4 also corresponds to an example of the touch sensor in this applied embodiment. Also, assuming that position data is created by the method illustrated in FIG. 17B, a combination of the position data creating unit 252 and the magnification data creating unit 253 corresponds to an example of the area designating unit in this applied embodiment.

Also, in the method illustrated in FIG. 17C, the four direction keys 252c respectively representing four, vertical and horizontal, directions on the sub-display 201 are displayed on the sub-display 201. A touch to any of the direction keys 252c is detected by the touch sensor 203. Then, the area A1 on the main display 101 is designated using position data Iₛ determined by an addition process or a subtraction process of a predetermined increment value, the process being associated with the touch-detected direction key 252c.

According to the method, since the area A1 is designated by a touch operation to the direction keys 252c which is intuitively easy to understand, an operation is easy.

This means that the following applied embodiment is suitable for the image display system, the information processing apparatus, and the display device of the present subject. In this applied embodiment, the second display device includes a touch sensor that detects a touch position touched by the operator on the display screen of the second display device. Also, in this applied embodiment, the area designating unit displays, on the display screen of the second display device, a plurality of marks respectively representing a plurality of directions on the display screen of the second display device. The area designating unit further causes the touch sensor to detect one of the plurality of marks that is touched by the operator. Then, the area designating unit designates, on the basis of the mark detected by the touch sensor, a moved area resulting from moving, along the display screen as described below, an area before being moved on the display screen of the first display device. That is, the area designating unit designates a moved area resulting from moving an area before being moved, in a movement direction corresponding to the direction represented by the mark detected by the touch sensor.

The touch sensor 203 illustrated in FIG. 4 also corresponds to an example of the touch sensor in this applied embodiment. Also, assuming that position data is created by the method illustrated in FIG. 17C, a combination of the position data creating unit 252 and the magnification data creating unit 253 corresponds to an example of the area designating unit in this applied embodiment.

As methods for designating an area on the main display, methods for designating such an area on the basis of sequential device positions or touch positions have been described, but area designating methods are not limited to these ones. For example, such an area designating method may be a method for determining whether or not a device position or a touch position has been moved by a movement amount equal to or greater than a threshold in a same movement direction and designating an area in the following manner depending on a determination result. If it is determined that such movement has not occurred, similarly to the above-described embodiments, an area is designated on the basis of sequential device positions or touch positions. In contrast, if it is determined that such movement has occurred, after the determination, area designation as described below is repeatedly performed until a stop is instructed by a user operation. Specifically, in this case, a moved area is designated that results from moving an area before being moved, in a movement direction by a predetermined increment value of the movement according to the determination. In this area designating method, if the user moves a sub-display device or a finger in a desired movement direction by a movement amount equal to or greater than a threshold, then the designated area automatically moves as if the movement is inertial movement. Then, when a partial image of a desired area is displayed on the sub-display, stopping the movement is instructed by, for example, a touch to the sub-display or a button operation. As a result, the user can view a partial image of a desired area with a small number of operations.

Also, in the present embodiment, the area A1 on the main display 101 is designated to be scalable into three stages in response to a button operation to the A button 206. Then, a partial image in the area designated in this way is scaled depending on the size of the sub-display 201 so as to be included in a full screen and displayed on the sub-display 201. Accordingly, the user may scale the size of the area A1 to a desired size as illustrated in FIG. 23 and FIG. 24 to view the partial image in the desired-size area A1 of the lower-order image.

This means that the following applied embodiment is suitable for the image display system, the information processing apparatus, and the display device of the present subject. In this applied embodiment, the area designating unit designates an area on the display screen of the first display device to be freely movable and scalable in response to an operation by the operator.

Also, in this applied embodiment, the second display control unit displays, on the display screen of the second display device, a partial image that is based on lower-order image data received by the image receiving unit and scaled depending on the size of the display screen of the second display device.

In the present embodiment, a combination of the position data creating unit 252 and the magnification data creating unit 253 illustrated in FIG. 8B also corresponds to an example of the area designating unit in this applied embodiment. Also, the second display control unit 257 illustrated in FIG. 8 corresponds to an example of the second display control unit in this applied embodiment.

Also, in the present embodiment, in designation of an area, data obtained by multiplying xy components of position data Iₛ by a coefficient corresponding to a magnification represented by magnification data I_{b} is handled as area position data Iₘ.

Thereby, a higher designated magnification enables higher-operability image display; for example, the movement of a partial image on the sub-display 201 with the movement of the sub-display device 200 is reduced.

This means that the following applied embodiment is suitable for the image display system, the information processing apparatus, and the display device of the present subject. In this applied embodiment, the area designating unit designates a moved area resulting from moving, along a display screen as described below, an area before being moved on the display screen of the first display device. Specifically, the area designating unit designates a moved area resulting from moving an area before being moved by a movement amount calculated with a scaling ratio of a partial image displayed on the display screen of the second display device as one variable.

In the present embodiment, a combination of the position data creating unit 252 and the magnification data creating unit 253 illustrated in FIG. 8B also corresponds to an example of the area designating unit in this applied embodiment.

Also, in the present embodiment, if there are a plurality of lower-order images, the B button 207 is operated to designate one of the plurality of lower-order images, a partial image of which is displayed on the sub-display 201. Accordingly, the user can select a desired lower-order image from a plurality of lower-order images to view a partial image of the desired lower-order image.

This means that the following applied embodiment is suitable for the image display system, the information processing apparatus, and the display device of the present subject.

In this applied embodiment, the area designating unit further designates one of images being second or lower in display priority from images instructed to be displayed on the display screen of the first display device in response to an operation by the operator. Also, in this applied embodiment, the designated area transmitting unit transmits the area designation data as well as transmits the following image designation data. That is, the designated area transmitting unit also transmits the image designation data for identifying the image designated by the area designating unit. Also, in this applied embodiment, the designated area receiving unit receives both the image designation data and area designation data transmitted from the second display device. In this applied embodiment, the lower-order image creating unit creates lower-order image data representing a partial image of the following image, in an area based on the area designation data received by the designated area receiving unit. That is, the lower-order image creating unit creates lower-order image data representing a partial image in the area, of an image based on the image designation data received by the designated area receiving unit.

In the present embodiment, a combination of the position data creating unit 252, the magnification data creating unit 253, and the image designation data creating unit 254 illustrated in FIG. 8B corresponds to an example of the area designating unit in this applied embodiment. Also, the designated area transmitting unit 255 illustrated in FIG. 8B corresponds to an example of the designated area transmitting unit in this applied embodiment. Also, the designated area receiving unit 154 illustrated in FIG. 8A corresponds to an example of the designated area receiving unit in this applied embodiment. Further, a combination of the image data detecting unit 158 and the image data converting unit 159 illustrated in FIG. 8A also corresponds to an example of the lower-order image creating unit in this applied embodiment.

It should be noted that, in the foregoing, as an embodiment of the image display system of the present subject, the system including the personal computer 100 and the sub-display device 200 has been illustrated, but the image display system of the present subject is not limited thereto. For example, the image display system of the present subject may also be a system including a television device having a function of connecting to the Internet, and a sub-display device. In such a system, an on-air program is displayed as an upper image, a content screen on the Internet is displayed as a lower-order image, and viewing and operating the content screen is performed on the sub-display device.

Also, in the foregoing, as an embodiment of the image display system of the present subject, a form has been illustrated in which the personal computer 100 corresponding to a first display device and the sub-display device 200 corresponding to a second display device are connected to each other through wireless communications using a radio wave. However, the image display system of the present subject is not limited thereto. For example, the image display system of the present subject may be a system in which the first display device and the second display device are connected to each other through wireless communications that do not use a radio wave, but infrared communications, for example. Alternatively, the image display system of the present subject may also be a system in which the first display device and the second display device are connected to each other through wired communications.

## Claims

1. An image display system comprising a first display device including a display screen that displays an image based on image data and a second display device including a display screen that displays an image based on image data transmitted from the first display device, wherein
the first display device includes:
a memory that, if there are a plurality of images instructed to be displayed on the display screen of the first display device, stores a display priority of the plurality of images;
an image composition unit that creates composite image data representing a composite image of an appearance in which an image that is lower in the display priority among the plurality of images is hidden by an image that is higher in the display priority;
a first display control unit that displays the composite image on the display screen of the first display device based on the composite image data created by the image composition unit;
a lower-order image creating unit that creates lower-order image data representing at least a part of one of images that is second or lower in the display priority; and
an image transmitting unit that transmits the lower-order image data created by the lower-order image creating unit to the second display device, and
the second display device includes:
an image receiving unit that receives the lower-order image data transmitted from the first display device; and
a second display control unit that displays, on the display screen of the second display device, a partial image based on the lower-order image data received by the image receiving unit.

2. The image display system according to claim 1, wherein
the second display device includes:
an area designating unit that designates an area on the display screen of the first display device to be freely movable in response to an operation by an operator; and
a designated area transmitting unit that transmits, to the first display device, area designation data representing the area on the display screen of the first display device, the area being designated by the area designating unit,
the first display device includes a designated area receiving unit that receives the area designation data transmitted from the second display device, and
the lower-order image creating unit creates lower-order image data representing a partial image of one of images that is second or lower in the display priority, the partial image being in the area based on the area designation data received by the designated area receiving unit.

3. The image display system according to claim 2, wherein
the second display device is freely moved by the operator and further includes a movement sensor that detects a movement direction and a movement amount of the second display device, and
the area designating unit designates, based on the movement direction and movement amount detected by the movement sensor, an area moved when an area before being moved on the display screen of the first display device is moved in a movement direction depending on the movement direction detected by the movement sensor by a movement amount depending on the movement amount detected by the movement sensor along the display screen of the first display device.

4. The image display system according to claim 2, wherein
the second display device includes a touch sensor that detects a position touched by the operator, on the display screen of the second display device, and
the area designating unit designates, based on the touch position detected by the touch sensor, an area moved when an area before being moved on the display screen of the first display device is moved in a movement direction depending on the touch position detected by the touch sensor by a movement amount depending on the touch position along the display screen.

5. The image display system according to claim 2, wherein
the second display device includes a touch sensor that detects a movement direction and a movement amount of a touch position after a touch by the operator on the display screen of the second display device, and
the area designating unit designates, based on the movement direction and the movement amount detected by the touch sensor, a moved area resulting from moving an area before being moved on the display screen of the first display device, in a movement direction corresponding to the movement direction detected by the touch sensor by a movement amount detected by the touch sensor along the display screen of the first display device.

6. The image display system according to claim 2, wherein
the second display device includes a touch sensor that detects a touch position touched by the operator on the display screen of the second display device, and
the area designating unit displays, on the display screen of the second display device, a plurality of marks respectively representing a plurality of directions on the display screen of the second display device, causes the touch sensor to detect one of the plurality of marks that is touched by the operator, and designates, based on the mark detected by the touch sensor, a moved area resulting from moving an area before being moved on the display screen of the first display device, along the display screen of the first display device in a movement direction corresponding to the direction represented by the mark detected by the touch sensor.

7. The image display system according to any one of claims 2 to 6, wherein
the area designating unit designates an area on the display screen of the first display device to be freely movable and scalable in response to an operation by the operator, and
the second display control unit displays, on the display screen of the second display device, a partial image that is based on lower-order image data received by the image receiving unit and scaled depending on the size of the display screen of the second display device.

8. The image display system according to claim 7, wherein the area designating unit designates a moved area resulting from moving, along the display screen of the first display device, an area before being moved on the display screen of the first display device, by a movement amount calculated with a scaling ratio of a partial image displayed on the display screen of the second display device as one variable.

9. The image display system according to any one of claims 2 to 8, wherein
the area designating unit further designates one of images being second or lower in display priority from images instructed to be displayed on the display screen of the first display device in response to an operation by the operator,
the designated area transmitting unit transmits the area designation data as well as transmits image designation data for identifying the image designated by the area designating unit,
the designated area receiving unit receives both the image designation data and area designation data transmitted from the second display device, and
the lower-order image creating unit creates lower-order image data representing a partial image in an area based on the area designation data received by the designated area receiving unit, the partial image being of an image based on the image designation data received by the designated area receiving unit.

10. An information processing apparatus for displaying on a display screen an image based upon image data, the apparatus comprising:
a memory that, when there are a plurality of images instructed by the information processing apparatus to be displayed onto the display screen, stores a display priority of the plurality of images;
an image composition unit that creates composite image data representing a composite image of an appearance in which an image that is lower in the display priority among the plurality of images is hidden by an image that is higher in the display priority;
a control unit that displays the composite image on the display screen based on the composite image data created by the image composition unit;
a lower-order image creating unit that creates lower-order image data representing at least a part of one of images that is second or lower in the display priority; and
an image transmitting unit that transmits the lower-order image data created by the lower-order image creating unit to a display device including the display screen which receives image data and displays an image based on the received image data.

11. The information processing apparatus according to claim 10, comprising a designated area receiving unit that receives area designation data representing an area on the display screen of the information processing apparatus, the area being designated to be freely movable on the display device and transmitted from the display device, wherein
the lower-order image creating unit creates lower-order image data representing a partial image of one of images that is second or lower in the display priority, in an area based on the area designation data received by the designated area receiving unit.

12. A display device for displaying on a display screen an image based upon image data transmitted from an information processing apparatus for displaying on a display screen an image based on image data, the display device comprising:
an area designating unit that designates an area displayed on the display screen by the information processing apparatus, to be freely movable in response to an operation by an operator;
a designated area transmitting unit that transmits, to the information processing apparatus, area designation data representing the area on the display screen designated by the area designating unit;
an image receiving unit that receives lower-order image data representing a partial image in an area based on the area designation data of one of images that is second or lower in the display priority in the information processing apparatus, the lower-order image data being transmitted from the information processing apparatus; and
a display control unit that causes the display screen to display the partial image based on the lower-order image data received by the image receiving unit.

13. An image display method in an image display system comprising: a first display device including a first display screen that displays an image based on image data and a memory that stores, when there are a plurality of images instructed to be displayed on the first display screen, a display priority of the plurality of images, and the first display device displaying, when there are a plurality of images instructed to be displayed on the display screen, a composite image of an appearance in which an image that is lower in the display priority among the plurality of images is hidden by an image that is higher in the display priority on the first display screen, and a second display device including a second display screen that displays an image based on image data transmitted from the first display device, the method for displaying an image on the second display screen,
the method executed by the first display device, comprising:
creating lower-order image data representing at least a part of one of images that is second or lower in the display priority and configuring a composite image displayed on the first display screen; and
transmitting the created lower-order image data to the second display device; and
the method executed by the second display device, comprising:
receiving the lower-order image data transmitted from the first display device; and
displaying on the second display screen a partial image based on the received lower-order image data.
